(19) Europäisches Patentamt / European Patent Office / Office européen des brevets

(11) **EP 3 451 490 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(51) Int Cl.:
*H02J 50/12* *(2016.01)*        *H02J 50/40* *(2016.01)*
*H02J 50/00* *(2016.01)*

(21) Anmeldenummer: **18000770.0**

(22) Anmeldetag: **30.11.2015**

(54) **KOPPLUNGSOPTIMIERTE DRAHTLOSE ELEKTRISCHE ENERGIEÜBERTRAGUNG**

COUPLING-OPTIMIZED WIRELESS TRANSFER OF ELECTRIC ENERGY

TRANSMISSION D'ÉNERGIE ÉLECTRIQUE SANS FIL OPTIMISÉE AU NIVEAU D'ACCOUPLEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2014 DE 102014019621**

(43) Veröffentlichungstag der Anmeldung:
**06.03.2019 Patentblatt 2019/10**

(60) Teilanmeldung:
**21000270.5**

(62) Dokumentnummer(n) der früheren Anmeldung(en) nach Art. 76 EPÜ:
**15003405.6 / 3 041 112**

(73) Patentinhaber: **Rehm, Markus**
**78052 Villingen-Schwenningen (DE)**

(72) Erfinder: **Rehm, Markus**
**78052 Villingen-Schwenningen (DE)**

(56) Entgegenhaltungen:
EP-A2- 2 528 185        EP-A2- 2 552 030
WO-A1-2013/115419       WO-A1-2014/131938
WO-A1-2014/178345       US-A- 5 831 348

EP 3 451 490 B1

**Beschreibung**

Technisches Gebiet der Erfindung

Die aktuelle Erfindung bezieht sich auf die drahtlose elektrische Energieübertragung mittels induktiv- oder kapazitiv gekoppelter Resonanzkreise. Des Weiteren bezieht sich die aktuelle Erfindung auf die Steuerung der Kopplung, auf die Steuerung der zu übertragenden Leistung und die Resonanzgleichrichtung.

Hintergrund der Erfindung

Drahtlose Energieversorgung von Geräten kann mittels induktiver- und / oder kapazitiver Nahfeldkopplung realisiert werden. Dabei erzeugt eine Sendeeinheit ein elektromagnetisches Wechselfeld. Dieses elektromagnetische Wechselfeld wird über gekoppelte Spulen (induktive Kopplung) oder über einen offenen Kondensator (kapazitive Kopplung) an den Verbraucher, im Folgenden als Empfängereinheit bezeichnet, gekoppelt.

Mit zunehmendem Abstand von Sendeeinheit zu Empfängereinheit verringert sich der Kopplungsgrad (k) und vermindert die an der Empfängereinheit empfangbare Leistung. Im Fall von einem offenen Kondensator (als Kopplungselement) verkleinert sich dabei die Kopplungskapazität und im Fall von gekoppelten Spulen vergrößert sich die Streuinduktivität. Man kompensiert diesen Effekt, indem man die Streuinduktivität mit Kondensatoren kompensiert bzw. den Koppelkondensator mit Induktivitäten kompensiert. Dadurch entstehen mindestens ein Schwingkreis auf der Quellen- und Empfängereinheitseite der Energieübertragungsstrecke. Diese Schwingkreise kompensieren die Streuinduktivität bzw. Koppelkapazität, sofern die Schwingkreise auf die gleiche Resonanzfrequenz abgestimmt sind und die Energieübertragungsstrecke bei dieser Resonanzfrequenz betrieben wird. Eine vollkommene Kompensation, unter Verwendung der Sekundärgüte Qsec, wird im Wesentlichen unter der Bedingung k·Qsec=1 erreicht (kritische Kopplung). Dies entspricht einer Drahtverbindung. Für Werte k·Qsec>1 entstehen mehrere Resonanzfrequenzen, welche die Frequenzbandbreite vergrössern aber keinen Zuwachs der Übertragungsleistung von Sendeeinheit zur Empfängereinheit ergibt. Aus diesem Grund sollte eine drahtlose Energieübertragungstrecke möglichst nahe der kritischen Kopplung betrieben werden, was somit den Wirkungsgrad maximiert. Ein weiterer Grund die drahtlose Energieübertragungsstrecke unter möglichst kritischer Kopplung zu betreiben, ist das reduzierte Streufeld 1-k·Qsec. Dies reduziert die Störungen. Diese Störungen werden von der Sendeeinheit, als Streufeld abgestrahlt und vom Sekundärschwingkreis durch die Schaltfunktion der Gleichrichtung zusätzlich erzeugt (nichtlineare Verzerrungen).

Eine sich ändernde Kopplung (k) durch ändernde geometrische Eigenschaften der Kopplungstrecke und/oder eine sich ändernde Sekundärgüte (Qsec) des Empfangsschwingkreises der Empfängereinheit ist ein Hauptproblem, das es zu lösen gilt. Qsec ist eine Funktion des Lastwiderstandes RL, welcher in der Realität meistens nicht konstant ist. Oft benötigt man eine stabile Ausgangsspannung oder einen stabilen Ausgangsstrom und RL wird vom Verbraucher und der abgegebenen Leistung bestimmt (z. Bsp. Licht, Wärme, Lautstärke, Bewegungsintensität usw.). Es ist daher wünschenswert ein Verfahren zu entwickeln, welches eine drahtlose Energieübertragungsstrecke möglichst unabhängig vom Lastwiderstand RL optimal betreiben lässt. Dies umfasst das Steuern von Qsec unabhängig von RL und das Optimieren von Qsec, um den Wirkungsgrad und/oder die Reichweite der Leistungsübertragung zu erhöhen oder zu steuern. Ein solches Verfahren soll einfach, kostengünstig, effizient und zuverlässig operieren.

Ein Schwingkreis, nach dem Oberbegriff der aktuellen Erfindung, in einem ersten Modus als Parallelschwingreis als Empfänger drahtloser Leistung zu betreiben und in einem zweiten Modus als Serieschwingkreis als Empfänger drahtloser Leistung zu betreiben, ist aus der US 20160049800 A1 bekannt. Weiter ist die Parallelschwingkreis Gleichrichtung eines Schwingkreises, welcher in einem ersten Modus als Parallelschwingkreis und in einem zweiten Modus als Serieschwingkreis operiert aus der WO 2014/131938 A1 bekannt. Der Stand der Technik beinhaltet keine Gleichrichtung für den Fall, dass der Schwingkreis als Serieschwingkreis operiert.

Es wäre wünschenswert, Gleichrichtfunktion auch im Fall des Serieschwingkreises zu erlangen. Damit bester Wirkungsgrad erreicht werden kann, sollte zudem Vollweggleichrichtfunktion implementiert sein. Wegen der Zuverlässigkeit ist man technisch und auch mit kommerziellem Hintergrund an einer Lösung interessiert, welche so wenig Bauteile wie möglich benötigt.

Diese Aufgabe wird anhand der Merkmale der unabhängigen Patentansprüche 1 und 8 gelöst. Vorteilhafte Ausgestaltungen der Erfindung ergeben sich anhand der Merkmale der abhängigen Patentansprüche, sowie der weiteren Beschreibung und der Ausführungsbeispiele.

Kurzbeschreibung der Zeichnungen

Figur 1 zeigt das Blockschaltbild einer Sendeeinheit und zwei Empfängereinheiten, wie sie in einer drahtlosen resonanzgekoppelten Energieübertragung eingesetzt wird in der aktuellen Erfindung.

Figuren 2a und 2b zeigen das Blockschaltbild und die Empfängergütecharakteristik einer Empfängereinheit in einer resonanzgekoppelten Energieübertragung.

Figuren 3a und 3b zeigen das Blockschaltbild und die Empfängergütecharakteristik einer Empfängereinheit in einer resonanzgekoppelten Energieübertragung.

Figur 4 zeigt ein Steuerungsablaufdiagram gemäss den Figuren 2a und 3a.

Figuren 5a bis 5e zeigen eine kombinierte Serie-Parallelresonanzempfängerschaltung gemäss einem Aspekt der aktuellen Erfindung.

Figuren 6a und 6b zeigen ein weiteres Ausführungsbeispiel der aktuellen Erfindung.

Figur 7 zeigt eine Zustandmaschine gemäss den Figuren 5a und 6a.

Figuren 8 — 11 zeigen Ablaufdiagramme gemäss der Figur 7.

Figuren 12 und 13 zeigen eine kombinierte Serie-Parallelresonanzempfängerschaltung und deren Güteeigenschaften gemäss einem weiteren Aspekt der aktuellen Erfindung.

Figur 14 zeigt ein Detailschaltbild gemäss einem Ausführungsbeispiel ähnlich dem in Figur 6a.

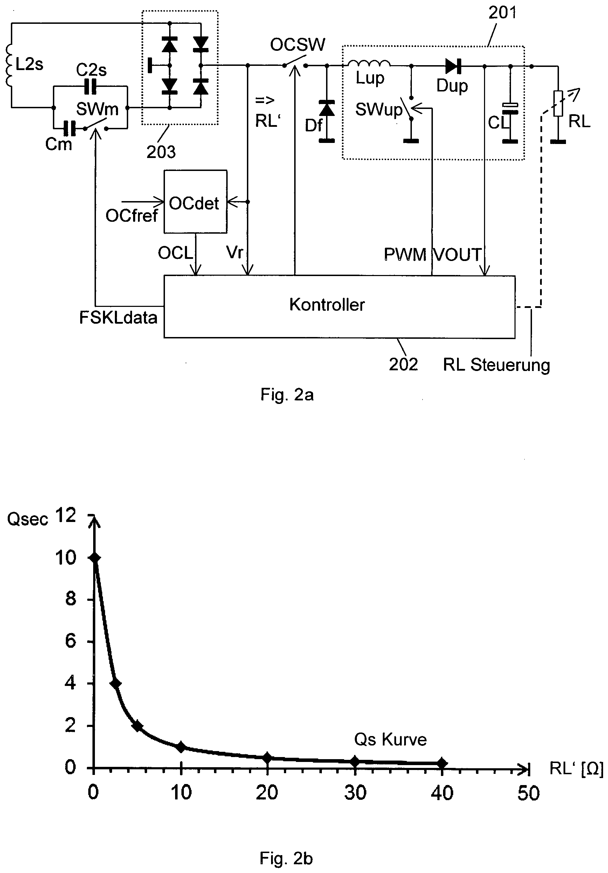

Die Figuren 2a, 2b, 3a, 3b und 4 und deren Detailbeschreibungen sind nicht erfindungsgemäss und dienen lediglich der Veranschaulichung.

Detaillierte Beschreibung der Erfindung

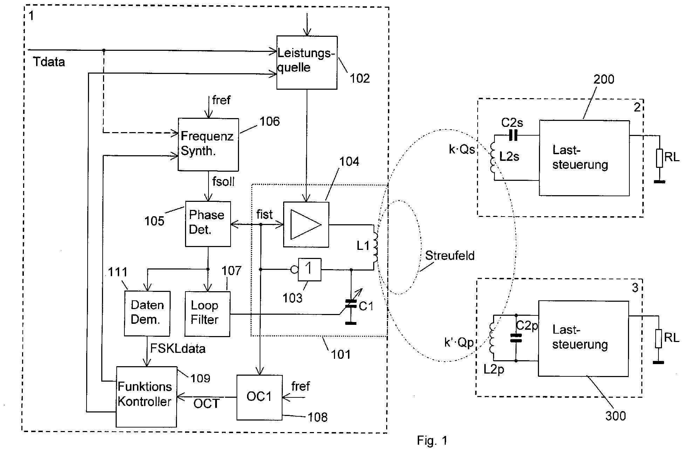

Das Blockschaltbild in Figur 1 zeigt eine Sendeeinheit 1, welche ein oder mehrere Empfängereinheiten (z. Bsp. 2, 3) über ein oder mehrere Kopplungsfaktoren (z. Bsp. k, k') drahtlos mit Energie versorgt. 1 umfasst einen Großsignal VCO 101, der von einer gesteuerten Leistungsquelle 102 mit der nötigen Betriebsspannung versorgt wird. 102 ist vorteilhafterweise als gesteuertes und/oder geregeltes Schaltnetzteil (SMPS) oder Linearnetzteil ausgeführt.

Der Begriff Großsignal VCO steht hier für einen Oszillator, dessen aktives Element 104 im Wesentlichen im Schaltbetrieb arbeitet aber alternativ auch als Linearverstärker ausgeführt ist. Dabei werden Halb- und Vollbrückenverstärker eingesetzt.

Der invertierende Verstärker 104 treibt einen Resonanzkreis, z. Bsp. einen Serieschwingkreis, bestehend aus der Kapazität C1 und der Primärspule L1 der drahtlosen Übertragungstrecke. Ein oder mehrere reaktive Elemente werden durch einen Strom oder eine Spannung in ihrem Wert gesteuert, um die Frequenz des Oszillators zu steuern. Vorteilhafterweise umfasst die Frequenzsteuerung mindestens einen Kopplungsschalter, der mindestens eine Induktivität oder mindestens eine Kapazität über ein variables Kopplungsintervall, welches kleiner oder gleich einer Schwingkreisperiode ist, an den übrigen Schwingkreis koppelt (nicht gezeigt in Figur 1).

Ein Inverter 103 schließt eine Rückkopplungsschleife auf den Eingang von 104 und sorgt für eine andauernde Strom- bzw. Spannungsschwingung im Schwingkreis (Mitkopplung). In einem weiteren Ausführungsbeispiel der aktuellen Erfindung ist der Großsignal VCO mit einer Parallelgegentaktstufe bestückt, welche einen Parallelschwingkreis aus L1 und C1 treibt (nicht gezeigt in Figur 1). Die Beschreibungen aller nachfolgenden Eigenschaften der Sendeeinheit sind für den Großsignal VCO mit Serieschwingkreis und Großsignal VCO mit Parallelschwingkreis identisch.

Ein Schwingkreissignal (Ausgangssignal fist von 103) wird in einem Phasenvergleicher 105 mit einem Sollwert (fsoll) verglichen. fsoll wird in einem Frequenzsynthesizer 106 mittels einer Referenzfrequenz (fref) erzeugt. 106 entspricht im Wesentlichen einem programmierbaren Frequenzteiler, dessen Teilerwert als Variable in einem Register innerhalb 106 gespeichert bleibt. Das Ausgangssignal von 105 wird mittels eines Schleifenfilters 107 gefiltert und anschließend auf die verstellbare Kapazität C1 als Steuergröße gegeben. Schwingt 101 nicht auf fsoll, so generiert 105 ein Fehlersignal am Ausgang, welches nach Filterung mit 107 C1 solange nachstellt, bis fist gleich fsoll wird.

Auf diese Weise strahlt 1 elektromagnetische Energie ab, welche in der Frequenz auf fsoll geregelt ist. Jegliche Art der Frequenzverstimmung wie z. Bsp. durch Komponententoleranzen, Alterung der Bauteile oder Änderungen in einer angekoppelten Last werden innerhalb ein paar weniger Schwingkreisperioden ausgeregelt.

Ein Überkopplungsdetektor (OC1) 108 detektiert im Wesentlichen eine überkritisch gekoppelte Energieübertragungsstrecke. Dies entspricht im Wesentlichen der vereinfachten Bedingung $k \cdot Qsec > 1$, wobei Qsec der Güte einer angekoppelten Empfängereinheit entspricht und k des Kopplungsfaktors der Kopplungsstrecke zwischen Sende- und Empfängereinheit. Das Produkt $k \cdot Qsec$ wird in der folgenden Beschreibung als Energiekopplung oder abgekürzt als Kopplung bezeichnet. Die in der Empfängereinheit empfangene Leistung oder Energie ist abhängig vom Quadrat der Kopplung. Falls mehrere Empfängereinheiten an 1 angekoppelt sind, definiert die Summe aller Empfangsleistungen aller Empfängereinheiten wieviel Leistung 1 im minimum abstrahlt. Strahlt 1 mehr Leistung ab, als die Summe aller Empfangsleistungen aller Empfängereinheiten, so entspricht die Differenz der Leistung, welche über das Streufeld verloren geht. Die einzelnen Teilkopplungen $k \cdot Qs$ und $k' \cdot Qp$ charakterisieren somit die Leistungs- bzw. Energieübertragung der Teilübertragungstrecken. Die Schreibweise $k \cdot Qsec$ fasst alle Teilübertragungsstrecken von mehreren Empfängereinheiten zusammen und wird im Folgenden als resultierende Rückwirkung auf 1 zur Kopplungsbestimmung verwendet.

108 analysiert die Periode und/oder Frequenz des Oszillators und signalisiert über das Ausgangssignal OCT den Überkopplungsbetrieb dem Funktionskontroller 109, sobald mehr als ein gemeinsamer Pol im Resonanzwerk erscheint. 109 verändert, reagierend auf das OCT Signal, den Oszillatorbetrieb über 102 und/oder 106. Dies umfasst das Verkleinern oder Aussetzen des abgestrahlten Feldes über Verkleinern und/oder Abschalten der Betriebsspannung des Oszillators in 102. Alternativ, oder in Kombination dieser Massnahme wird die Frequenz des Oszillators über 106 geändert. Dabei verändert 109 die Teilervariable in 106. Dies verändert die Kopplungseigenschaften (Kopplungsfaktor k) der Übertragungsstrecke oder verringert bzw. unterbindet die Energieübertragung. Auf diese Weise wird garantiert, dass im Wesentlichen nur Leistung abgestrahlt wird, solange die Energieübertragungsstrecke nicht im überkritisch gekoppelten Betriebszustand operiert.

109 steuert zusätzlich 102 zur Leistungsregelung. Dabei wird die Versorgungsspannung von 104 so gesteuert, dass die abgestrahlte Leistung so gross ist wie sie in einer oder mehreren Empfängereinheiten erforderlich ist um eine oder mehrere RL mit der nötigen Leistung zu versorgen. Die Versorgungsspannung von 104 wird hierzu reagierend auf FSKLdata über 109 und 102 entweder in der Amplitude verändert oder getastet oder alternativ als Kombination der beiden gesteuert. FSKLdata beinhalten Daten welche einer Regeldifferenz zwischen einem Referenzwert und Ausgangswert an RL ermittelten Grössen entsprechen. Dies wird in 2 und/oder 3 bestimmt und drahtlos an 1 übertragen. Dies erfolgt beispielsweise über eine zusätzliche Verbindung wie WLAN, Bluetooth, Zigbee oder wie in Fig.1 gezeigt über Modulation des von 1 abgestrahlten Feldes. Hierzu wird entweder Lastmodulation oder Frequenzmodulation eingesetzt. Dabei detektiert der Datendemodulator 111 entsprechend FSKLdata Phasennachregelwerte und generiert hiervon die von 2 und/oder 3 gesendeten Nachrichten. Diese Nachrichten werden in Zeitmultiplex übertragen.

109 steuert zusätzlich 106 zur Frequenzsteuerung. Hierzu wird von der konstanten Referenzfrequenz fref die Teilervariable in 106 sequentiell so geändert, dass sich ein vorgegebenes Frequenzspektrum in fsoll ergibt. Dieses vorgegebene Frequenzspektrum umfasst z.Bsp. eine diskrete Frequenz, ein angenähertes Rechteck oder ein Sin(x)/x usw.. Weiter weisen diese vorgegebenen Spektren Nullstellen oder Bereiche auf, bei welchen keine Leistung abgestrahlt wird. Zu diesem Zweck teilt 106 keine Teilerwerte von fref, welche diese Frequenznullstellen in fsoll ergeben. So werden auch beliebige Frequenzbänder beliebig genau relativ zu fref im abgestrahlten Feld generiert.

Die Leistungsquelle 102 wird über einen weiteren Eingang in der Amplitude mit einer Bitsequenz andauernd oder zeitweise gemäss den Daten Tdata moduliert. Alternativ oder kombiniert zur Modulation in 102 werden Tdata auf 106 geführt (gestrichelte Verbindung). 106 ändert mit einer Bitsequenz in Tdata andauernd oder zeitweise den Teilerwert in einem Bereich um den von 109 vorgegebenen Wert. Dies entspricht Frequenzumtastung (FSK) und moduliert somit das abgestrahlte Feld in der Frequenz basierend auf Tdata. Der Datenstrom Tdata wird in einem Ausführungsbeispiel in 109 generiert und in 109, 102 oder 106 so aufbereitet, dass er einem Manchester Code oder Differential Manchester Code entspricht. Dieser Code ist alternativ als unipolar implementiert. Tdata in 102 oder 106 wird ignoriert, falls Tdata nicht gesendet wird. Hierzu ist ein datasend Signal benutzt welches Tdata in 102 bzw. 106 berücksichtigt oder ignoriert (nicht gezeigt in Figur 1).

Figur 1 zeigt weiter eine Empfängereinheit 2 mit Serieschwingkreis und eine weitere Empfängereinheit 3 mit Parallelschwingkreis, dessen Induktivitäten L2s und L2p durch induktive Kopplung mit der Sendeeinheit 1 gekoppelt sind. Die Anzahl von zwei Empfängereinheiten ist beliebig und zeigt eine Leistungsübertragung von einer Sendeeinheit zu mindestens einer Empfängereinheit. Es ist weiter beliebig, ob eine Empfängereinheit mittels Serie- oder Parallelschwingkreis zur Kopplung benutzt wird. Die Sekundärgüte (Qs) bei Verwendung eines Serie Schwingkreises in 2 ist bestimmt durch

$$Qs = \frac{\omega \cdot L2s}{RL}$$

. Die Sekundärgüte (Qp) bei Verwendung eines

Parallel Schwingkreises in 3 ist bestimmt durch

$$Qp = \frac{RL}{\omega \cdot L2p}$$

, wobei $\omega$ die Kreisfrequenz darstellt.

Die Laststeuerung 200 in 2 und 300 in 3 richtet die empfangene Wechselspannung gleich, filtert sie und konvertiert sie, um je mindestens ein RL zu treiben.

Figur 2a zeigt ein Blockschaltbild der Empfängereinheit 2 mit dem Empfangsschwingkreis L2s und C2s. Der Gleichrichter 203 richtet die beiden Hochfrequenzhalbwellen gleich. Ein Überkopplungsschalter OCSW koppelt die gleichgerichtete Wechselspannung zu einem Hochsetzsteller 201, bestehend aus der Induktivität Lup, Schalter SWup, Diode Dup und Kondensator CL, welcher den Lastwiderstand RL treibt. Die Diode Df ist die Freilaufdiode wenn OCSW öffnet und in Lup noch Strom fliesst.

Ein Überkopplungsdetektor OCdet detektiert im Wesentlichen eine überkritisch gekoppelte Energieübertragungsstrecke. OCdet analysiert die Periode und oder die Frequenz der empfangenen Wechselspannung mittels einer Referenzfrequenz OCfref und signalisiert über das Ausgangssignal OCL den Überkopplungsbetrieb dem Kontroller 202. Ähnlich wie 108 in der Sendeeinheit wechselt OCL seinen Zustand, sobald sich mehr als ein gemeinsamer Pol im Resonanzwerk einstellt. Reagierend auf das OCL Signal, öffnet 202 den Schalter OCSW, was den effektiv wirkenden Widerstand RL' am Ausgang 203 maximiert. Dies minimiert Qs in 2 und minimiert bzw. unterbindet die Energieübertragung. Auf diese Weise wird garantiert, dass im Wesentlichen nur Leistung empfangen und an RL übertragen wird, solange die Energieübertragungsstrecke nicht im überkritisch gekoppelten Betriebszustand operiert.

Alternativ, oder als Kombination zum Öffnen von OCSW, verringert 201 das Pulsweitensignal PWM und generiert so in SWup ein kürzeres Leitinterval. Als Folge vergrössert sich der effektiv wirkende Widerstand RL' am Ausgang 203. Dies verkleinert Qs und bewirkt eine kleinere Kopplung der Energieübertragungsstrecke. Auf diese Weise wird garantiert, dass die Energieübertragungsstrecke immer unterhalb des überkritischen Kopplungszustandes bleibt.

Anstelle oder in Kombination der RL Transformation durch 201 wird in einem weiteren Ausführungsbeispiel der aktuellen Erfindung mindestens ein Teil von einem oder mehreren RL verändert, um die Kopplung zu steuern (siehe gestrichelte Linie in Figur 2a). Vorteilhafterweise wird eine Hauptlast gesteuert falls mehrere Teillasten einen gesamten RL bestimmen. Hierzu steuert 202 eine Betriebsspannung und/oder die Taktfrequenz mindestens eines Prozessors, um dessen Last zu verändern. Ein solcher Prozessor kann Teil einer Multimedia- oder beliebigen Computereinheit sein wie z. Bsp. graphischer Prozessor (GPU), Arithmetikprozessor usw.. In einem weiteren Ausführungsbeispiel steuert 202 die Spannung oder den Strom einer Display Hintergrundbeleuchtung mittels LED oder 202 steuert die Grundhelligkeit oder Kontrast eines OLED Displays (nicht gezeigt in Figur 2a). Diese Displays sind Teil von Mobiltelefonen, Tablets, Laptops, Brillen, Armbandelektronik oder TVs. Weiter steuert 202 die Spannung oder den Strom, um Batterien aufzuladen oder Motoren anzutreiben.

202 regelt via FSKLdata die abgestrahlte Leistung in der Sendeeinheit und oder 202 regelt über 201 die Ausgangsspannung an RL. Hierzu misst 202 die Ausgangsspannung oder Ausgangsstrom über bzw. durch RL und vergleicht den Messwert mit einem Referenzwert. Der daraus resultierende Regeldifferenzwert wird zusammen mit anderen Daten als serieller Datenstrom FSKLdata an SWm gekoppelt. SWm moduliert die Schwingkreiskapazität basierend FSKLdata. Ist z. Bsp. ein Datenbit von FSKLdata auf logisch "1", so ist die resultierende Schwingkreiskapazität C2stot = C2s + Cm. Ist ein Datenbit von FSKLdata auf logisch "0", so ist die resultierende Schwingkreiskapazität C2stot = C2s. Dies entspricht Frequenzumtastung (FSK) und moduliert somit über die drahtlose Enegieübertragungsstrecke die Last an 1. Der Datenstrom FSKLdata entspricht vorteilhafterweise einem Manchester Code oder Differential Manchester Code und ist alternativ als unipolar implementiert. Da die Leistungsregelung, bzw. Ausgangsspannungsregelung über RL in Kombination mit der Datenübertragung mittels FSKLdata in 1 langsamer erfolgt als die Regelung in 201, regelt 201 die schnellen Lastwechsel und 1 die langsamen Lastwechsel.

Figur 2b zeigt die Sekundärgüte als Funktion des auf den Serieschwingkreis (L2s, C2s) wirkenden Lastwiderstandes RL' der Empfängereinheit 2. Als Beispiel sind Werte von 12,5μH für L2s und eine Frequenz von 125kHz berücksichtigt. Je kleiner RL', desto grösser Qs und je besser lassen sich kleine Kopplungsfaktoren (k) kompensieren. Es ist klar, dass sich Frequenz- und Werteangaben beliebig verändern lassen in den Erklärungen.

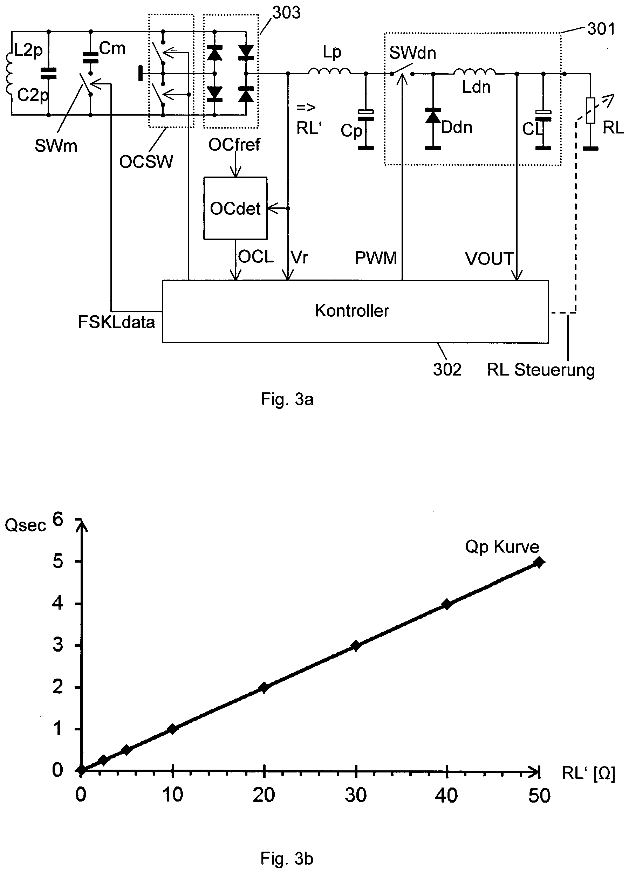

Figur 3a zeigt ein Blockschaltbild der Empfängereinheit 3 mit dem Empfangsschwingkreis L2p und C2p. Der Gleichrichter 303 richtet die beiden Hochfrequenzhalbwellen gleich. Ein Überkopplungsschalter OCSW koppelt die gleichgerichtete Wechselspannung zu einem Tiefsetzsteller 301, bestehend aus der Induktivität Ldn, Schalter SWdn, Diode Ddn und Kondensator CL, welcher den Lastwiderstand RL treibt. Optionell, filtern die Induktivität Lp und die Kapazität Cp die gleichgerichtete Spannung am Ausgang von 303.

Ein Überkopplungsdetektor OCdet detektiert im Wesentlichen eine überkritisch gekoppelte Energieübertragungsstrecke. OCdet analysiert die Periode und oder die Frequenz der empfangenen Wechselspannung mittels einer Referenzfrequenz OCfref und signalisiert über das Ausgangssignal OCL den Überkopplungsbetrieb dem Kontroller 302. Ähnlich wie 108 in der Sendeeinheit wechselt OCL seinen Zustand, sobald sich mehr als ein Pol im Resonanzwerk einstellt. Reagierend auf das OCL Signal, schliesst 302 die beiden Schalter OCSW, was den effektiv wirkenden Widerstand RL' am Parallelschwingkreis L2p, C2p minimiert. Dies minimiert Qp in 3 und minimiert bzw. unterbindet die Energieübertragung. Auf diese Weise wird garantiert, dass im Wesentlichen nur Leistung empfangen und an RL übertragen wird, solange die Energieübertragungsstrecke nicht im überkritisch gekoppelten Betriebszustand operiert.

Alternativ, oder als Kombination zum Schliessen von OCSW, verringert 301 das Pulsweitensignal PWM und generiert so in SWdn ein längeres Leitinterval. Als Folge verkleinert sich der effektiv wirkende Widerstand RL' am Ausgang 303. Dies verkleinert Qp und bewirkt eine kleinere Kopplung der Energieübertragungsstrecke. Auf diese Weise wird garantiert, dass die Energieübertragungsstrecke immer unterhalb des überkritischen Kopplungszustandes bleibt.

Anstelle oder in Kombination der RL Transformation durch 301 wird in einem weiteren Ausführungsbeispiel der aktuellen Erfindung mindestens ein Teil von einem oder mehreren RL verändert, um die Kopplung zu steuern (siehe gestrichelte Linie in Figur 3a). Vorteilhafterweise wird eine Hauptlast gesteuert falls mehrere Teillasten einen gesamten RL bestimmen. Hierzu steuert 302 eine Betriebsspannung und/oder die Taktfrequenz mindestens eines Prozessors um dessen Last zu verändern. Ein solchen Prozessor kann Teil einer Multimedia- oder beliebigen Computereinheit sein wie z. Bsp. graphischer Prozessor (GPU), Arithmetikprozessor usw.. Weiter steuert 302 die Spannung oder den Strom einer Display Hintergrundbeleuchtung mittels LED oder 302 steuert die Grundhelligkeit oder Kontrast eines OLED Displays. Diese Displays sind Teil von Mobiltelefone, Tablets, Laptops, Brillen, Armbandelektronik oder TVs. Weiter steuert 302 die Spannung oder den Strom, um Batterien aufzuladen oder Motoren anzutreiben.

302 regelt via FSKLdata die abgestrahlte Leistung in der Sendeeinheit und oder 302 regelt über 301 die Ausgangsspannung an RL. Hierzu misst 302 die Ausgangsspannung oder Ausgangsstrom über bzw. durch RL und vergleicht den Messwert mit einem Referenzwert. Der daraus resultierende Regeldifferenzwert wird zusammen mit anderen Daten als serieller Datenstrom FSKLdata an SWm gekoppelt. SWm moduliert die Schwingkreiskapazität basierend FSKLdata. Ist z. Bsp. ein Datenbit von FSKLdata auf logisch "1", so ist die resultierende Schwingkreiskapazität C2ptot = C2p + Cm. Ist ein Datenbit von FSKLdata auf logisch "0", so ist die resultierende Schwingkreiskapazität C2ptot = C2p. Dies entspricht Frequenzumtastung (FSK) und moduliert somit über die drahtlose Enegieübertragungsstrecke die Last an 1. Der Datenstrom FSKLdata entspricht vorteilhafterweise einem Manchester Code oder Differential Manchester Code und ist alternativ als unipolar implementiert. Da die Leistungsregelung, bzw. Ausgangsspannungsregelung über RL in Kombination mit der Datenübertragung mittels FSKLdata in 1 langsamer erfolgt als die Regelung in 301, regelt 301 die schnellen Lastwechsel und 1 die langsamen Lastwechsel.

Die Ausgangssignale von 109, welche 102 und/oder 106 abhängig von OCT in der Sendeeinheit 1 der Figur 1 steuern, reagieren zeitlich verzögert gegenüber den OCSW Ausgangssignalen der Empfängereinheiten 2 und 3 (siehe Figuren 2a und 3a), falls die drahtlose Energieübertragungstrecke im überkritisch gekoppelten Zustand operiert. Dies bedeutet, OC1 in 1 hat eine längere Ansprechzeit als OCdet von 2 und 3, oder OCT wird in 1 zusätzlich verzögert gegenüber OCL in 203 und 303. Dies gewährleistet, dass immer zuerst die Empfängereinheiten (z. Bsp. 2 und / oder 3) von der Sendeeinheit 1 entkoppelt, bzw. "elektrisch abgehängt" werden, um den überkritischen Kopplungszustand aufzuheben bevor 109 in 1 Massnahmen ergreift. Vorteilhafterweise verbleibt elektrische Energie in L1 und C1 und demzufolge im abgestrahlten Feld. Folglich kann die drahtlose Energieübertragunsstrecke sofort wieder Leistung an Empfängereinheiten (z. Bsp. 2 und / oder 3) übertragen, sobald sich eine oder mehrere wieder mit 1 koppeln.

Figur 3b zeigt die Sekundärgüte als Funktion des auf den Parallelschwingkreis (L2p, C2p) wirkenden Lastwiderstandes RL' der Empfängereinheit 3. Als Beispiel sind Werte von 12,5$\mu$H für L2p und eine Frequenz von 125kHz berücksichtigt. Je grösser RL', desto grösser Qp und je besser lassen sich kleine Kopplungsfaktoren (k) kompensieren.

In den Figuren 2a und 3a werden die gleichgerichtete Wechselspannung Vr zusätzlich auf 202 und 302 gekoppelt, um alle Teilbetriebsspannungen, welche für den Betrieb in 2 und 3 erforderlich sind zu generieren. Zu diesem Zweck beinhalten 202 und 302 Spannungsstabilisierungsschaltungen. Weiter wird eine maximale Spannung von Vr in 202 und 302 detektiert (Überspannungsschutz), und sobald der maximale Spannungswert überschritten wird, wird die Kopplung über die Güte Qsec reduziert oder minimiert. Dies erfolgt wie oben beschrieben mittels 201, 202, 301, 302 und/oder dem Steuern von RL aber in umgekehrter Richtung wie oben beschrieben, sodass sich die Kopplung verkleinert. Auf diese Weise wird 2 und 3 vor Überspannung geschützt. Zu diesem Zweck beinhaltet 202 und 302 Analog- Digital Konverter.

Es ist für einen Fachmann klar, dass für die Steuerung oder Regelung des Lastwiderstandes RL in den Figuren 2a und 3a weitere gesteuerte Spannungsregler vorhanden sind. Diese Spannungsregler sind vorteilhafterweise zusätzlich geschaltene Schaltregler, welche im Fall von Prozessorenspeisung Tiefsetzsteller sind und im Fall von den anderen Lasten Tiefsetzsteller und/oder Hochsetzsteller sind. Weiter wird Vr oder eine Frequenzreferenz z. Bsp. OCfref in 202 und 302 als Taktgeber benutzt. Die Frequenzreferenz z. Bsp. OCfref wird dazu von einem Quarzoszillator erzeugt. Alternativ werden in 202 und 303 einzelne oder mehrere Taktfrequenzen vom Zeitverlauf von Vr abgeleitet, um Eingangssignale synchron zum empfangenen elektromagnetischen Feld zu verarbeiten. Dies geschieht entweder direkt oder, falls ein höherer Takt benötigt wird, mittels zusätzlichem PLL innerhalb 202 und 302. Dementsprechend sind FSKLdata, das PWM für 201 und 301, die RL Steuerung und optional die Signale für die Schalter OCSW synchron zu Vr. Vorteilhafterweise erreicht man dadurch Zerovoltage switching (ZVS) von OCSW und SWup in Figur 2a und Zerocurrent switching (ZCS) von OCSW und SWdn in Figur 3a.

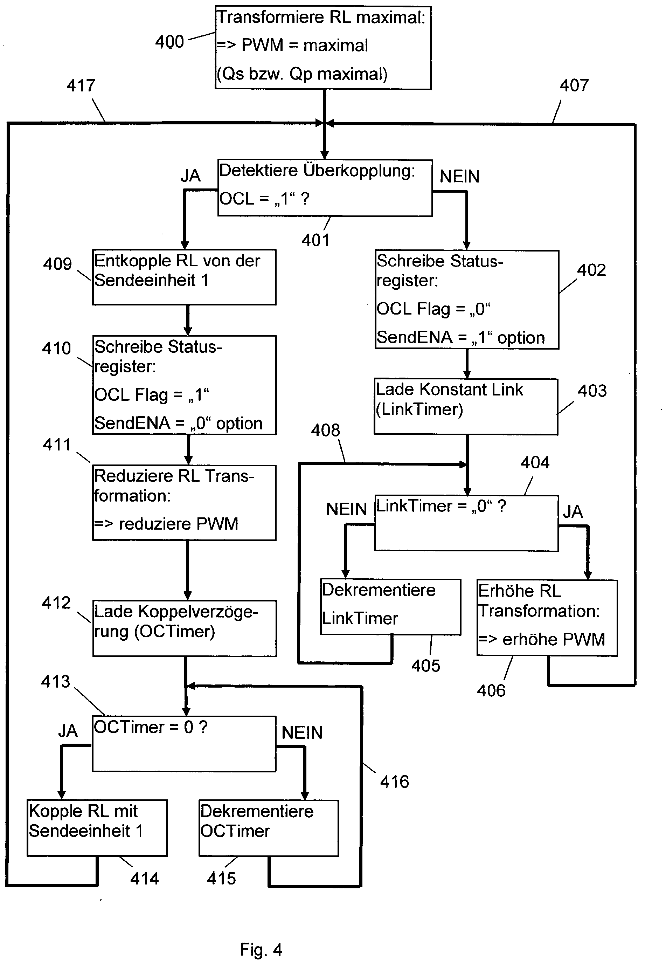

Figur 4 zeigt ein Ausführungsbeispiel der Steuermethode einer sequentiellen Kopplungsteuerung der Empfängereinheiten 2 und 3, wie sie in den Figuren 2a, 2b und 3a, 3b oben beschrieben sind. Anfangsbedingung ist keine vorherige Kopplung zwischen 1 und 2 und/oder 3. Weiter wird von einem sich vergrösserndem Kopplungsfaktor (k) ausgegangen, eine Situation wie sie in der Praxis häufig vorkommt, sobald sich 1 und 2 und/oder 3 annähern. Die beschriebene Methode gilt allgemein ohne weitere Einschränkung bezüglich 2 und 3 und wird im folgenden auf die Beschreibung von den Figuren 2a, 2b, 3a und 3b verwiesen.

Sobald Vr genügend Ausgangsspannung aufweist um 203, 303 zu versorgen, transformiert 202, 302 RL maximal an 203, 303, um grösste Güte (Qsec) zu erreichen. Dies geschieht entweder über das Tastverhältnis im PWM Ansteuersignal von 201, 301 und / oder mittels Steuern von RL, sodass sich maximale Güte Qs bzw. Qp ergibt. Dies ist im Schritt 400 gezeigt. Dies gewährleistet grösste Reichweite, z. Bsp. beim Annähern von 1 und 2 und/oder 3.

In 401 wird detektiert, ob sich Überkopplung einstellt, hier signalisiert über das Signal OCL mit logisch "1". Falls OCL keine Überkopplung anzeigt (z. Bsp. OCL mit logisch "0"), kann 2 bzw. 3 weiter mit maximaler Güte operieren (Ausgangspfad "Nein"). In Schritt 402 werden Statusregister geschrieben z. Bsp. das OCL Flag, welches Teil von FSKLdata ist und 1 den Kopplungszustand von 2 und/oder 3 mitteilt. In einem Ausführungsbeispiel, wird die Kommunikation von neuen FSKLdata mittels SendENA mit logisch "1" freigegeben. In 403 wird die Zeitkonstante (LinkTimer) gesetzt, welche, solange sie nicht abgelaufen ist, in der Schlaufe 404, 405 und 408 dekrementiert wird. Dabei wird eine vordefinierte "KonstanteA" in den LinkTimer geladen und kontinuierlich dekrementiert. Falls der Zählerstand im LinkTimer zu null wird, erhöht 406 das Tastverhältnis im PWM Ansteuersignal von 201, 301 und/oder RL wird so gesteuert, dass sich die Güte Qsec erhöht. Folglich erhöht sich die Kopplung. Der Rückkopplungspfad 407 initiiert ein erneutes Detektieren der Überkopplung mit 401. Diese Schlaufe gewährleistet, dass sich die drahtlose Energieübertragungstrecke immer mit möglichst kritischer Kopplung betreiben lässt oder diesen Wert annähert. Falls in 401 das Signal OCL mit logisch "1" detektiert wird (Ausgang "JA"), wird in 409 RL über OCSW in 2 und/oder 3 von 1 entkoppelt. Folglich ist die Kopplung zwischen 1 und 2 und/oder 3 minimal.

In Schritt 410 werden Statusregister geschrieben z. Bsp. das OCL Flag, welches Teil in der FSKLdata ist und 1 den Kopplungszustand von 2 und/oder 3 mitteilt. In einem Ausführungsbeispiel, wird die Kommunikation von neuen FSKLdata mittels SendENA mit logisch "0" unterbrochen. In einem weiteren Ausführungsbeispiel werden FSKLdata in einem anderen Frequenzband übertragen (wie z. Bsp. Bluetooth, WLAN, Zigbee oder NFC) und die Steuerung mittels SendENA nicht implementiert. In 411 wird das Tastverhältnis im PWM Ansteuersignal von 201, 301 und/oder RL so gesteuert, dass sich die Güte Qsec beim nächsten Wiederankoppeln von 1 und 2 und/oder 3 verkleinert. In 412 wird die Zeitkonstante (OCTimer) gesetzt, welche, solange sie nicht abgelaufen ist, in der Schlaufe 413, 415 und 416 dekrementiert wird. Dabei wird eine vordefinierte "KonstanteB" in den OCTimer geladen und kontinuierlich dekrementiert. Falls der Zählerstand im OCTimer zu null wird, koppelt 414 mittels OCSW RL in 2 und/oder 3 mit 1. Folglich ist RL wieder mit 1 gekoppelt, wobei die Kopplung kleiner ist zwischen 1 und 2 und/oder 3. Der Rückkopplungspfad 417 initiiert ein erneutes Detektieren der Überkopplung mit 401. Diese Schlaufe gewährleistet, dass sich die Kopplung immer vom überkritischen Zustand wegbewegt und die drahtlose Energieübertragungstrecke nie im Überkopplungszustand hängen bleibt.

Die beiden Rückkopplungspfade 407 und 417 zusammen maximieren die Kopplung der drahtlosen Energieübertragungsstrecken zwischen 1 und 2 und/oder 3. Vorteilhafterweise minimiert sich dabei das Streufeld, was kleinere Emissionen und weniger Störfelder bedeutet.

In einem Ausführungsbeispiel der aktuellen Erfindung leitet jedes OCL = "1" zwingend einen Sprung zu Schritt 401 ein (z. Bsp. über einen Interrupt).

Figur 4 zeigt die Kopplungsregelung bzw. Kopplungsoptimierung für den Fall, dass die Ausgangsspannung VOUT über RL nicht erreicht wird. Falls die maximale VOUT überschritten wird, reduziert sich das Tastverhältnis im PWM in 2 und/oder 3 unabhängig von der Kopplungssteuerung. Alternativ oder als Kombination wird RL in 2 und/oder 3 so gesteuert, dass die maximale VOUT nicht überschritten wird. Dazu beinhaltet 202 und 302 VOUT Regelungen wie sie in üblichen SMPS eingesetzt werden. Diese Regelungen regeln im wesentlichen die schnellen kleinen Lastwechsel in 2 und/oder 3. Die träge Regelung übernimmt 1 mittels 102 via FSKLdata und 109.

Die Ablaufsteuerung der Schritte in Figur 4 wird von einem internen Takt von 202 und 302 abgearbeitet. Dieser Takt ist in einem Ausführungsbeispiel synchron zum zeitlichen Verlauf von Vr und demzufolge synchron zum empfangenen elektromagnetischen Feld. In einem anderen Ausführungsbeispiel sind die Schritte in Figur 4 von einem internen Takt von 202 und 302 abgearbeitet, der nicht synchron zum elektromagnetischen Feld ist (z. Bsp. OCfref).

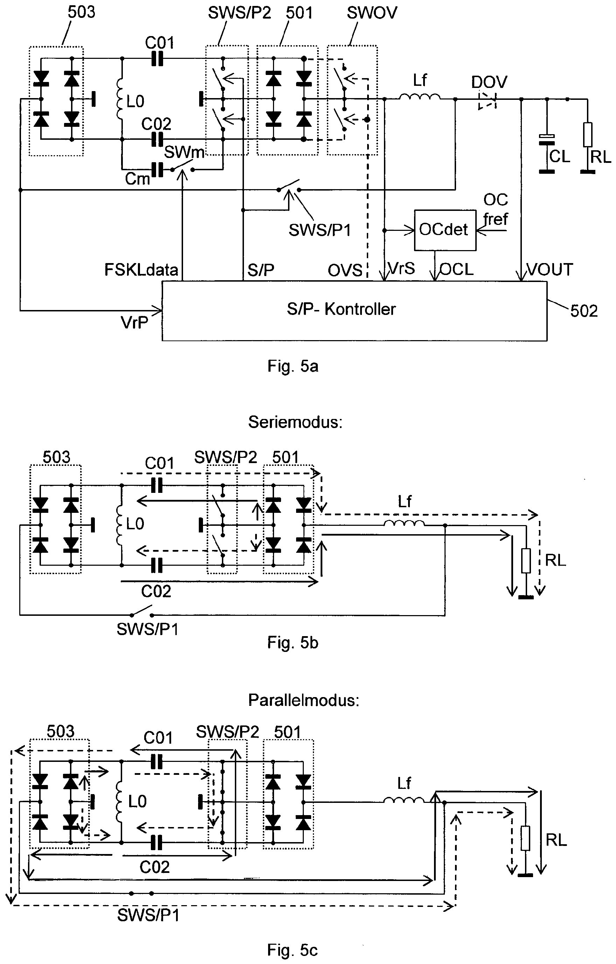

Ein weiteres Ausführungsbeispiel der aktuellen Erfindung zeigt in Figur 5a einen Schwingkreis L0, C01 und C02, welcher bei gleicher Resonanzfrequenz in einem ersten Modus, nachfolgend als Seriemodus bezeichnet, in Serieresonanz arbeitet und in einem zweiten Modus, nachfolgend als Parallelmodus bezeichnet, in Parallelresonanz arbeitet. C01 und C02 sind über den Vollweggleichrichter 501 in Serie zu L0 geschaltet. L0 entsprechend L2s, L2p in Figur 1 empfängt das von der Sendeeinheit 1 abgestrahlte elektromagnetische Feld. Parallel zu 501 liegt der Modeschalter SWS/P2, welcher zwei Schalter beinhaltet, je einer parallel zu den nach Masse geschalteten Dioden von 501. Der positive Ausgang von 501 ist über eine Seriefilterinduktivität Lf auf den Ladekondensator CL und zum Lastwiderstand RL gekoppelt. Parallel zur L0 ist ein weiterer Vollweggleichrichter 503 geschaltet, dessen positiver Ausgang über einen weiteren Modeschalter SWS/P1 zu CL und RL gekoppelt ist. Das Steuersignal S/P von SWS/P1 und SWS/P2 wird im S/P- Kontroller 502 generiert. 502 ist weitestgehend identisch in den Funktionen und beinhaltet ähnliche Verarbeitungsschritte wie 202 in Figur 2a und 302 in Figur 3a. Dies betrifft vor allem die Signale VOUT, OCL und FSKLdata. Weiter betrifft dies den internen Takt, die interne Speisung und die Steuerung von RL (hier nicht mehr gezeigt). Die interne Speisung und die Taktableitung vom empfangenen magnetischen Feld geschieht über VrS und/oder VrP. Alternativ ist in einem Ausführungsbeispiel der aktuellen Erfindung der Ausgang von 503 auch über eine Anzapfung von Lf zu CL gekoppelt. In diesem Fall wird nur eine Rückführung in Vr entweder seitens 501 oder seitens 503 von Lf benötigt. In einem weiteren Ausführungsbeispiel sind zusätzliche Schalter SWOV sowie eine Diode DOV (gestrichelt gezeichnet) im Strompfad von Lf zu CL implementiert. SWOV und DOV agieren zusammen als Schutzschaltung in einem Schutzmodus. OCdet und die FSKLdata Modulation mittels Cm und SWm sind gleich implementiert wie in 202 und/oder 302.

Liegt am Ausgang S/P von 502 ein Signal an (z. Bsp. "0" Pegel), welches SWS/P1 und SWS/P2 offen lässt, so ist der Seriemodus aktiv. Hierbei arbeitet L0, C01 und C02 in Serieresonanz bei der Resonanzfrequenz 1

$$fres = \frac{1}{2 \cdot \pi \cdot \sqrt{L0 \cdot \frac{C01}{2}}}$$

, sofern C01=C02 ist. Diese Symmetriebedingung soll möglichst eingehalten werden, um die Schwingkreis Resonanzspannung über C01 und C02 gleichmässig zu verteilen. In Figur 5b sind die Ströme der positiven Halbwelle (ausgezogene Pfeile) und die Ströme der negativen Halbwelle (gestrichelte Pfeile) eingezeichnet. L0, C01 und C02 agieren hierbei als Spannungsquelle.Die Dioden von 501 richten die Resonanzspannung gleich und leiten sie über Lf, welche als Filterinduktivität sinusförmigen Stromfluss in der Schwingkreisbelastung annähert, an die Last RL. 503, SWS/P1 und SWS/P2 können im Seriemodus als inexistent betrachtet werden.

Liegt am Ausgang S/P von 502 ein Signal an (z. Bsp. "1" Pegel), welches SWS/P1 und SWS/P2 geschlossen lässt, so ist der Parallelmodus aktiv. Hierbei arbeitet L0, C01 und C02 in Parallelresonanz bei der Resonanzfrequenz

$$fres = \frac{1}{2 \cdot \pi \cdot \sqrt{L0 \cdot \frac{C01}{2}}}$$

, sofern C01=C02 ist. Diese

Symmetriebedingung soll möglichst eingehalten werden, um die Schwingkreis Resonanzspannung über C01 und C02 gleichmässig zu verteilen. Der Mittelpunkt von SWS/P2 wird somit zu einem wechselspannungsmässigen Nullpunkt und 501 unterbricht den Stromfluss zu Lf, da die Spannungen über 501 im Maximum die Hälfte der Spannung über L0 erreichen. In Figur 5c sind die Ströme der positiven Halbwelle (ausgezogene Pfeile) und die Ströme der negativen Halbwelle (gestrichelte Pfeile) eingezeichnet. L0, C01 und C02 agieren hierbei als Stromquelle. Die Dioden von 503 richten die Resonanzspannung gleich und leiten sie an die Last RL. 501 und Lf können im Parallelmodus als inexistent betrachtet werden. Falls Lf von einem vorherigen Seriemodus noch Energie trägt, so leitet 501 so lange bis sich Lf entladen hat.

Im optionalen Schutzmodus liegt am Ausgang S/P von 502 ein Signal an (z. Bsp. "1" Pegel), welches SWS/P1 und SWS/P2 geschlossen lässt, was dem Parallelmodus entspricht. Hierbei arbeitet L0, C01 und C02 in Parallelresonanz bei der Resonanzfrequenz

$$fres = \frac{1}{2 \cdot \pi \cdot \sqrt{L0 \cdot \frac{C01}{2}}}$$

, sofern

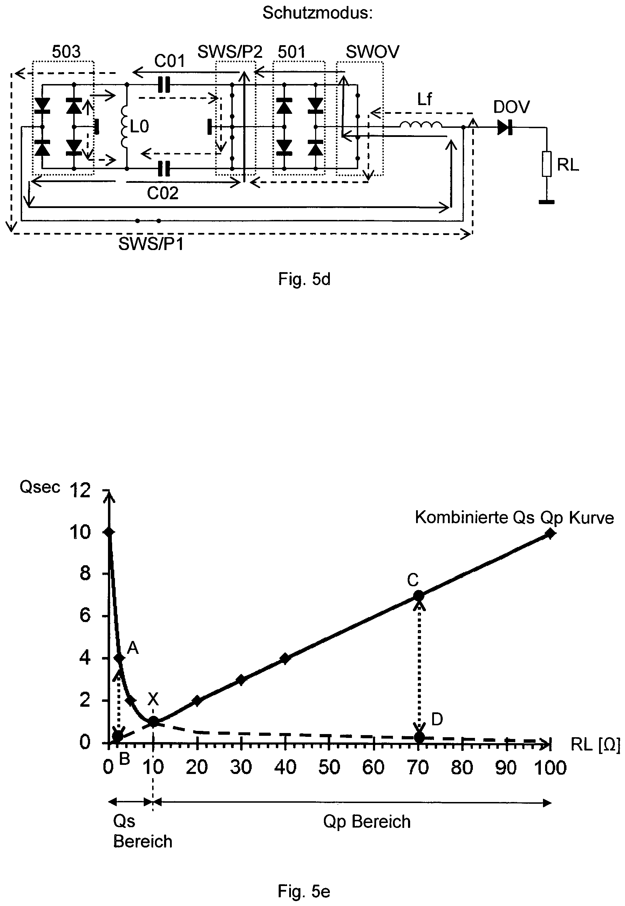

C01=C02 ist. Diese Symmetriebedingung soll möglichst eingehalten werden, um die Schwingkreis Resonanzspannung über C01 und C02 gleichmässig zu verteilen. Der Mittelpunkt von SWS/P2 wird somit zu einem wechselspannungsmässigen Nullpunkt. Zusätzlich sind im optionalen Schutzmodus die Schalter SWOV über das OVS Signal (z. Bsp. "1" Pegel) geschlossen. Weiter ist die DOV bestückt, welche nun RL vom Schwingkreis L0, C01, C02, 501 und 503 entkoppelt. Das empfangene elektromagnetische Feld wird im Schutzmodus durch SWS/P1, Lf, SWOV und SWS/P2 kurzgeschlossen und eine Verstimmung von *fres* durch Lf verhindert. Dies entspricht einer kurzgeschlossenen Stromquelle, dessen Verlust nur durch den ohmschen Verlust in der erwähnten Schlaufe bestimmt wird. Vorteilhafterweise ist die im Parallelschwingkreis (L0, C01 und C02) induzierte Spannung minimal, weil sich minimalste Güte einstellt (siehe Figur 3b bei RL=minimal). In Figur 5d sind die Ströme der positiven Halbwelle (ausgezogene Pfeile) und die Ströme der negativen Halbwelle (gestrichelte Pfeile) eingezeichnet.

Charakteristisch für alle 3 Modi ist, dass sich die drahtlose Energieübertragungstrecke im Wesentlichen immer in Resonanzkopplung befindet. Vorteilhafterweise werden dabei eine oder mehrere Empfängerlasten (RLs) reell an die Sendeeinheit gekoppelt und garantieren optimale Anpassung.

Die Anordnung nach Figur 5a ist in weiteren Ausführungsbeispielen der aktuellen Erfindung verschieden ausgeführt. So befindet sich in einem Ausführungsbeispiel SWS/P1 in der Massezuleitung von 503 und der positive Ausgang von 503 ist direkt mit Lf oder einer Anzapfung dessen verbunden.

In einem weiteren Ausführungsbeispiel befindet sich Lf anstelle zwischen Mittelpunkt SWOV und CL zwischen Masse und Mittelpunkt von SWS/P2. Für diesen Fall ist CL direkt an den Mittelpunkt von SWOV verbunden.

In einem weiteren Ausführungsbeispiel befindet sich Lf anstelle zwischen Mittelpunkt SWOV und CL zwischen Masse und Mittelpunkt von SWS/P2. Zusätzlich befindet sich SWS/P1 in der Massezuleitung von 503 und der positive Ausgang von 503 ist direkt mit CL verbunden. Als Option ist SWS/P1 nicht direkt auf Masse geschaltet, sondern ist zu einer Anzapfung von Lf kontaktiert.

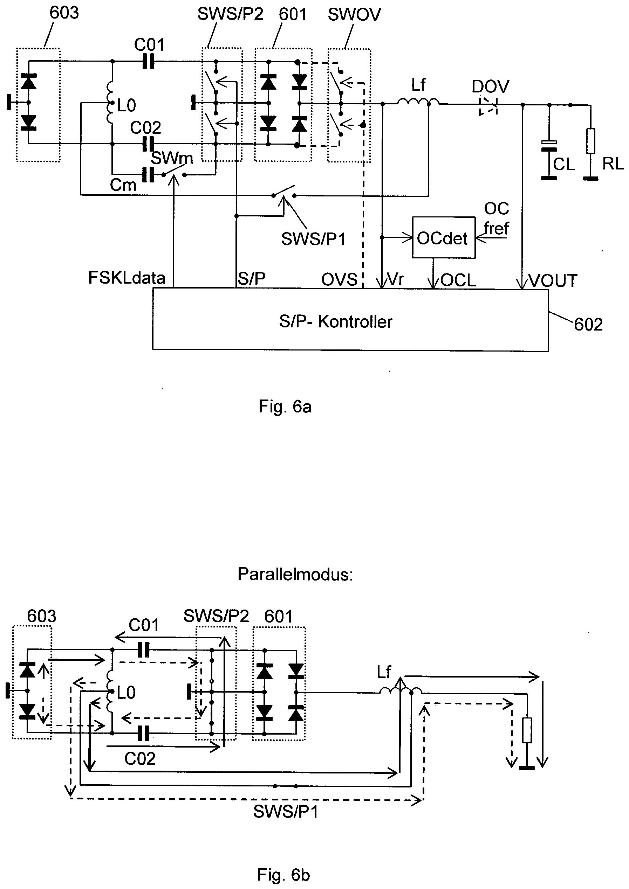

In einem weiteren Ausführungsbeispiel verfügt L0 über eine Mittelanzapfung und 503 ist als Zweiweggleichrichter implementiert, siehe Figur 6a. Dank der Mittelanzapfung von L0 lassen sich zwei Dioden in 603 sparen. Die Serie / Parallel Modusumschaltung geschieht identisch zu Figur 5a über S/P. Für den Seriemodus gilt das gleiche wie in Figur 5a und 5b. Der Parallelmodus generiert jedoch nur die Hälfte der Ausgangsspannung am Ausgang von 603 gegenüber der Schaltung nach Figur 5a und 5c. Damit sich 601 sicher abkoppelt ist der Ausgang von 603 über eine Anzapfung von Lf an CL gekoppelt. Dies transformiert die Ausgangsspannung von 603 zum Ausgang von 601 und sperrt dessen obere zwei Dioden. Somit bleibt nur der Strompfad von der Anzapfung von Lf zu RL wie es in Figur 6b gezeigt ist. Die Gleichrichtspannung wird für den Serie- als auch für den Parallelmodus über Vr an 602 gekoppelt.

In einem oder mehreren Ausführungsbeispielen gemäss den Figuren 5a und 6a und deren aller Ausführungsbeispiele sind die Dioden in 501, 503, 601 und 603 mindestens teilweise als Synchrongleichrichter implementiert. Vorteilhafterweise sind dann SWS/P2 und SWOV, sofern diese Option eingebaut ist, Teil von 501 und 601. Die Synchrongleichrichter lassen sich dann, bei einem Pegel in S/P (z.Bsp. "0"), als normale Synchrongleichrichter benutzen. Bei einem anderen Pegel von S/P (z. Bsp. "1" pegel) ist mindestens ein Teil des Synchrongleichrichters zwingend leitend, d.h. jeweils zwei Dioden sind zwingend kurzgeschlossen durch SWS/P2.

Figur 5e zeigt die Gütecharakteristik in Abhängigkeit von RL der Schaltung der Figur 5a bei der gleichen Frequenz und L0 wie in den Figuren 2b und 3b. Bei tiefen RL Werten (siehe Qs Bereich), liefert die Schaltung hohe Gütewerte im Seriemodus. Beim RL Wert, bei welchem die Güten im Serie- und Parallelmodus gleich gross sind, erreicht die Schaltung ihren tiefsten maximalen Gütewert Qsec. Bei hohen RL Werten liefert die Schaltung hohe Gütewerte im Parallelmodus (siehe Qp Bereich).

Die Schaltung nach der Figur 6a zeigt die gleiche Kurve nur mit der vierfachen Steigung für den Parallelmodus, da RL an der halben Windungszahl von L0 wirkt (Impedanztransformation von vier).

502 in Figur 5a und 602 in Figur 6a generieren das S/P Signal nach mindestens einer nachfolgend beschriebenen Methode. Mehrere dieser Methoden werden in einem oder mehreren Ausführungsbeispielen der aktuellen Erfindung zu unterschiedlichen Zeitpunkten oder Zeitintervallen kombiniert.

In einer ersten Methode wird VOUT über S/P ausgeregelt ohne Berücksichtigung der Steuerung von 1 via FSKLdata.

In einer weiteren Methode wird VOUT über S/P und FSKLdata ausgeregelt, d.h. unter Berücksichtigung der Steuerung von 1 via FSKLdata. Hierbei übernimmt S/P die schnelle Ausregelung, 102 in Figur 1 über 109 und mittels FSKLdata die langsame Ausregelung.

In einer weiteren Methode wird VOUT über S/P ausgeregelt, und zwar so, dass 502 und/oder 602 FSKLdata von mindestens einer anderen angekoppelten Empfängereinheit (z. Bsp. 2 und/oder 3) empfängt und ihre eigenen Ausgangssignale S/P und/oder FSKLdata abhängig sind von den vorgängig empfangenen FSKLdata von mindestens einer anderen angekoppelten Empfängereinheit (z. Bsp. 2 und/oder 3). Diese S/P- und/oder FSKLdata Ausgangssignale reagieren in ihren Werten (PWM Tastverhältnis und/oder seriell übertragene Daten) auf vorgängig empfangene FSKLdata von mindestens einer anderen angekoppelten Empfängereinheit (z. Bsp. 2 und/oder 3).

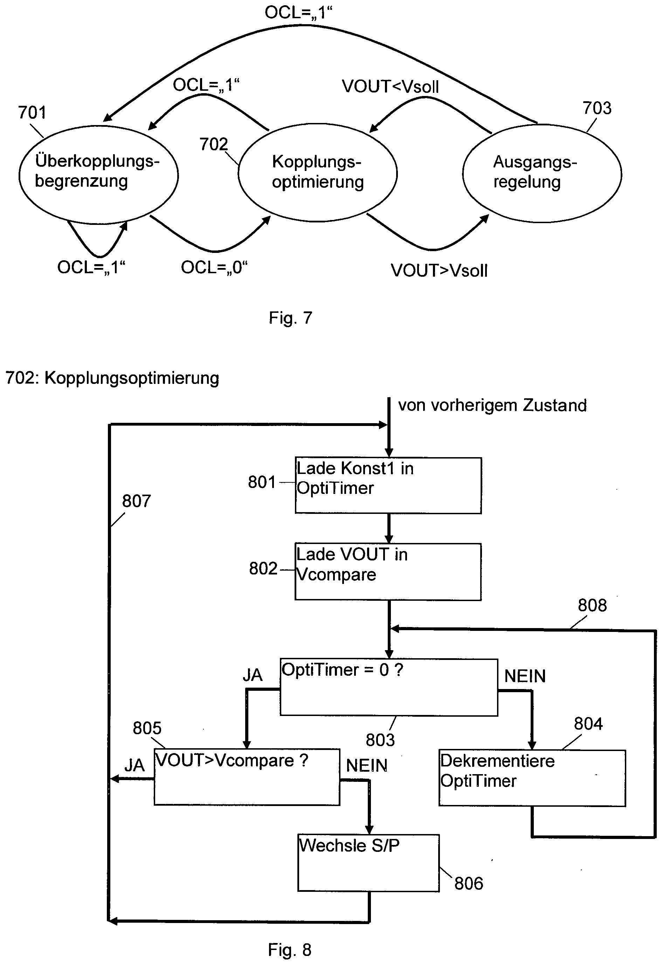

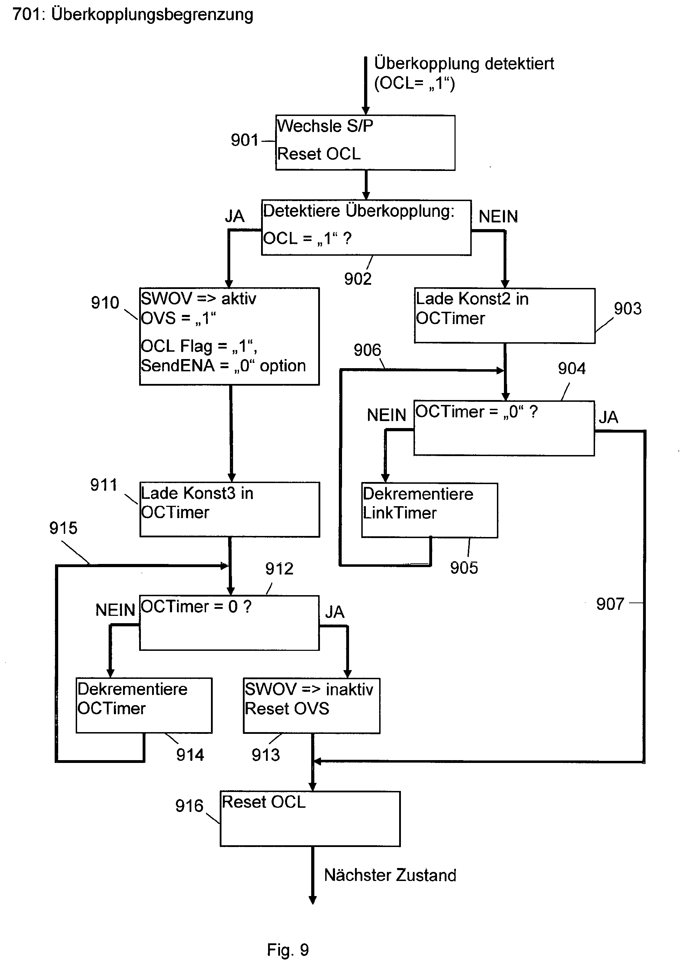

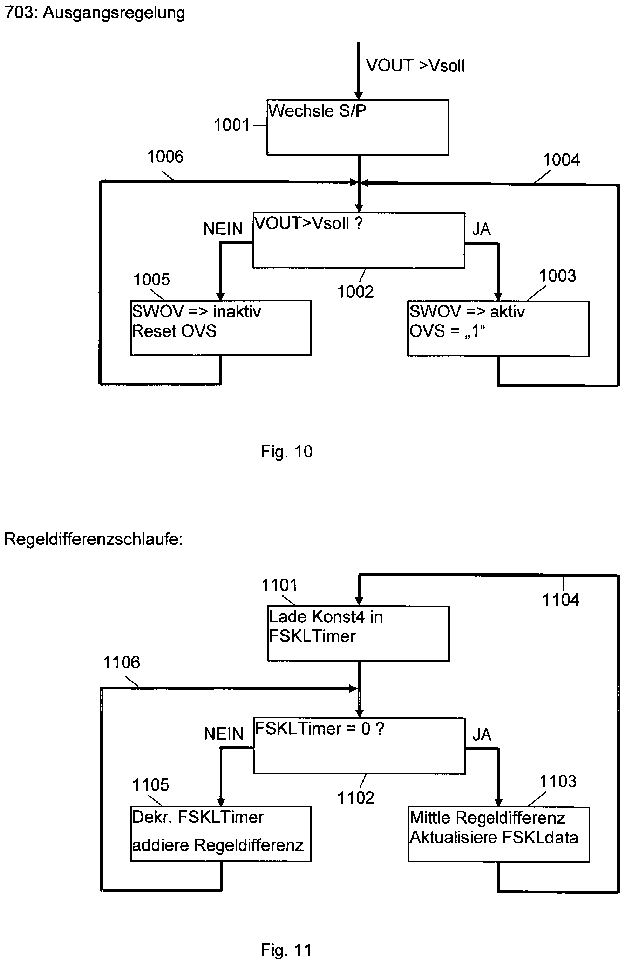

Figur 7 zeigt eine Zustandsmaschine, welche die zeitliche Ablaufsteuerung von Teilen innerhalb 502 bzw. 602 beschreibt. Im Folgenden wird weiter auf die Figur 8 (Zustand 702: Kopplungsoptimierung), die Figur 9 (Zustand 701: Kopplungsbegrenzung) und Figur 10 (Zustand 703: Ausgangsregelung) verwiesen. Bei der Ausgangsregelung wird die Ausgangsspannung auf eine gewünschte Sollgrösse Vsoll beschrieben. In einem weiteren Ausführungsbeispiel der aktuellen Erfindung wird der Ausgangsstrom auf eine gewünschte Sollgrösse Isoll geregelt. Im Unterschied zur Ausgangsspannungsregelung wird dabei der Strom durch einen oder mehrere RLs gemessen und an 502 und/oder 602 zurückgeführt.

Die beschriebenen Timer der Figuren 8 - 11 sind durch einen Takt oder mehrere Takte gesteuert mit den nachfolgenden Eigenschaften: Mindestens ein Takt ist entweder synchron zu mindestens einem der Signale Vrs, Vrp und Vr oder mindestens ein Takt ist synchron zu OCfref.

Weiter lassen sich eine oder mehrere Taktsignale in weiteren Ausführungsbeispielen der aktuellen Erfindung in der Frequenz variieren. Dabei werden mittels Pseudorandom Generatoren Taktsignale von Vrs, Vrp, Vr oder OCfref heruntergeteilt, welche Quasizufallseigenschaften aufweisen. Vorteilhafterweise verwischen sich dabei spektrale Mischprodukte und Interferenzen der im folgenden beschriebenen Regelschlaufen. Dadurch minimieren sich die Maxima der Störstrahlung der elektromagnetischen Strahlung durch Lastwechsel und/oder Steuer- bzw. Regelverhalten.

Aufgestartet wird mit dem Zustand 702. Hierbei wird S/P auf Seriemodus gesetzt im Falle eines minimalen RL Anfangswertes (z. Bsp. Glühlampe), oder S/P wird auf Parallelmodus gesetzt im Falle eines maximalen RL Anfangswertes (z. Bsp. LED). Letztere Situation trifft man in der Praxis vermehrt an, da oft die Hauptlast von Geräten durch Microcomputer gesteuert wird. In 801 wird eine Konstante (Konst1) in den OptiTimer geladen. Schritt 802 speichert die aktuelle Ausgangsspannung VOUT in die Variable Vcompare. 803 prüft ob OptiTimer schon abgelaufen ist, respektive ob OptiTimer einen definierten Endwert erreicht hat (z. Bsp. Zählerstand "0"). Ist dieser Endwert noch nicht erreicht, dekrementiert 804 den OptiTimer und 803 wird über die Rückkopplung 808 erneut ausgeführt. Ist der Endwert von OptiTimer erreicht, wird mit dem Vergleich 805 die aktuelle Ausgangsgrösse VOUT mit Vcompare verglichen. Ist VOUT kleiner als Vcompare, so wechselt 806 das Signal S/P und startet 702 über 807 von neuem. Ist VOUT grösser als Vcompare, so startet 702 über 807 von neuem. Auf diese Weise wird garantiert, dass die Ausgangsgrösse VOUT stetig steigt. Konst1 legt die Schlaufenzeit von 702 fest, welche minimal bei einer halben Periode des empfangenen elektromagnetischen Feldes liegt, sofern über Vrs, Vrp oder Vr synchronisiert wird. In einem Ausführungsbeispiel der aktuellen Erfindung ist die Schlaufenzeit von 702 von OCfref synchronisiert und liegt minimal kleiner als bei einer halben Periode des empfangenen elektromagnetischen Feldes. D.h. Serie- / Parallelmodus schalten zeitlich schneller hin und her als im halbperioden Takt des empfangenen elektromagnetischen Feldes.

Wird innerhalb des Zustandes 702 Überkopplung detektiert (OCL = "1"), dann wechselt der Zustand von 702 zu Zustand 701. Darin wechselt S/P sein Zustand in 901 und OCL wird zurückgesetzt. Falls RL im Bereich Qs oder Qp liegt, verkleinert sich dabei sofort die Güte Qsec (siehe Kurve in Figur 5e). Dabei wechselt Qsec z. Bsp. von A nach B oder von z. Bsp. C nach D. Folglich spricht OCL im nächsten Schritt 902 nicht wieder an und verweist auf Schritt 903. Darin wird eine Konstante Konst2 in den OCTimer geladen. 904 detektiert ob OCTimer einen definierten Endwert erreicht hat (z. Bsp. Zählerstand "0"). Ist dieser Endwert noch nicht erreicht, dekrementiert 905 den OCTimer und 904 wird über die Rückkopplung 906 erneut ausgeführt. Ist der Endwert von OCTimer erreicht, wird OCL in 916 mittels Pfad 907 zurückgesetzt und die Zustandsmaschine setzt mit dem Zustand 702 fort. Falls 901 die Überkopplung nicht aufhebt, z. Bsp. weil sich RL im Übergangsbereich von Qs und Qp befindet (siehe X in Figur 5e), wechselt 910 den Zustand von OVS (z. Bsp. OVS = "1") und S/P auf Parallelmodus. Der Schutzmodus ist aktiv. RL entkoppelt sich von 1 und Qsec wird minimal. Infolgedessen ist vorteilhafterweise, die von 1 nach 2 bzw. 3 übertragene Leistung bzw. übertragene Energie auch minimal.

In 910 wird das OCL Flag gesetzt, welches ein Nachrichtenteil von FSKLdata ist. Zusätzlich wird optional die FSKLdata Modulation über SendENA unterbrochen (z. Bsp. mit SendENA = "0"). Beim nächsten Schritt 911 wird der OCTimer mit einer Konstanten Konst3 geladen. 912 vergleicht wiederum wie 904 den OCTimer auf dessen Endwert und dekrementiert OCTimer über 914 und 915 bis 912 auf 913 verweist. Hierin koppelt sodann der zurückgesetzte SWOV RL wieder mit 1. Abschliessend wird wieder OCL in 916 zurückgesetzt und die Zustandmaschine weiter auf 702 gesetzt. Es ist offensichtlich, dass 701 weiter vereinfacht werden kann, bzw. die OCTimer-Schleifen kombiniert werden können. Konst2 und Konst3 sind gleich oder unterschiedlich und sind weiter so, dass OCTimer mindestens während einer halben Periode des empfangenen elektromagnetischen Feldes seinen Endwert nicht erreicht. In einen Ausführungsbeispiel ist Konst2 und/oder Konst3 von der aktuellen Ausgangsgrösse VOUT abhängig. Wird innerhalb 701 Überkopplung detektiert (OCL = "1"), dann springt 701 zu Schritt 901 und 701 wird erneut von Anfang durchlaufen.

Wird während 702 die Ausgangsgrösse Vsoll überschritten aber keine Überkopplung in OCL detektiert, so ist Zustand 703 aktiv. Darin wechselt S/P seinen Zustand in 1001. Falls RL im Bereich Qs oder Qp liegt, verkleinert sich dabei sofort die Güte Qsec (siehe Kurve in Figur 5e). Dabei wechselt Qsec z. Bsp. von A nach B oder von z. Bsp. C nach D und folglich verkleinert die kleinere Kopplung die Ausgangsgrösse VOUT. 1002 vergleicht nachfolgend ein weiteres mal ob VOUT grösser als Vsoll ist. Falls VOUT kleiner ist als Vsoll, wird in 1005 OVS zurückgesetzt und über 1006 die Schlaufe am Eingang 1002 geschlossen.

Falls 1001 die Ausgangsgrösse VOUT nicht verkleinert hat, z. Bsp. weil sich RL im Übergangsbereich von Qs und Qp befindet (siehe X in Figur 5e), wechselt 1003 den Zustand von OVS (z. Bsp. OVS = "1") und S/P auf Parallelmodus. Der Schutzmodus ist aktiv. RL entkoppelt sich von 1 und Qsec wird minimal. Infolgedessen ist vorteilhafterweise, die von 1 nach 2 bzw. 3 übertragene Leistung bzw. übertragene Energie auch minimal. Dadurch verkleinert sich VOUT. Die Rückkopplung 1004 veranlasst ein Verweilen innerhalb 703 solange bis VOUT kleiner als Vsoll ist. Trifft dies zu, so wechselt der Zustand 703 nach 702. Tritt in 703 Überkopplung ein so wechselt 703 zu 701. Auf diese Weise wird der Betrieb mit überkritischer Kopplung immer vermieden.

Die drahtlose Energieübertragungstrecke wird auf diese Weise andauernd mittels Serie- Parallelmodus (S/P Signal) und unter andauerndem Überkopplungsschutz (S/P- und OVS Signale) auf maximal kritische Kopplung optimiert bzw. folgt für jeden RL- Wert der Kurve in Figur 5e.

Die Regelung mittels FSKLdata welche die Regeldifferenz, oder falls mehrere RLs vorhanden sind die Summe einer Regeldifferenz, zu 1 überträgt ist in Figur 11 gezeigt. Dabei lädt 1101 eine Konstante Konst4 in den FSKLTimer. 1102 detektiert, ob FSKLTimer einen definierten Endwert erreicht hat (z. Bsp. Zählerstand "0"). Ist dieser Endwert noch nicht erreicht, dekrementiert 1105 den FSKLTimer und fügt einen neuen aktuellen Regeldifferenzwert (Vsoll-VOUT) in ein Schleifenarray ein. Die Rückkopplung 1106 bewirkt diesen Schlaufendurchlauf solange bis FSKLTimer seinen Endwert erreicht. In diesem Fall berechnet 1103 einen mittleren Regeldifferenzwert, welcher innerhalb FSKLdata zu 1 übertragen wird. Die Berechnung des gemittelten Regeldifferenzwertes innerhalb 1103 umfasst in einem Ausführungsbeispiel das Dividieren der Summe aller Regeldifferenzwerte im Schleifenarray durch Konst4.

Die Regeldifferenzschlaufe operiert andauernd. 1 steuert wie beschrieben die Ausgangsleistung und folglich auch die empfangbare Leistung in 2 und/oder 3. Wird eher wenig Leistung empfangen, so verweilt die Zustandsmaschine gemäss Figur 7 lange in 702. Dies bewirkt ein Erhöhen der Kopplung und der abgestrahlten Sendeleistung, da FSKLdata die abgestrahlte Leistung steuert. Erreicht VOUT Vsoll, wechselt 702 nach 703. 703 optimiert die Kopplung nicht, was die stationäre Genauigkeit (Regeldifferenz gleich null) und optimale Kopplung nicht immer konvergieren lässt. Darum wird in einem Ausführungsbeispiel der aktuellen Erfindung in 1103 ein Korrekturwert eingerechnet, welcher die Verweilzeit oder prozentuale Verweildauer oder das Verhältnis der Zustände 702 und 703 berücksichtigt. Alternativ, wird in einem weiteren Ausführungsbeispiel in gleicher Weise zusätzlich die Verweilzeit oder prozentuale Verweildauer in 701 miteingerechnet bzw. entsprechend gewichtet.

Über die Konstanten Konst1 — Konst4 lassen sich die Parameter wie Ausregelcharakteristik, Ansprechzeit, Wirkungsgrad usw. auf verschiedene dynamische Lasten RLs je nach gewünschten Anforderungen optimieren.

In einem weiteren Ausführungsbeispiel der aktuellen Erfindung ist der Schalter SWOV in Serie zwischen 501 und Lf in Figur 5a bzw. in Serie zwischen 601 und Lf in Figur 6a platziert. Der Schutzmodus ist dann mittels Seriemodus im S/P- Signal und offenem SWOV durch OVS- Signal implementiert (nicht gezeigt). Vorteilhafterweise erreicht man so kleinere Verluste im Schutzmodus, da kein Strom fliesst.

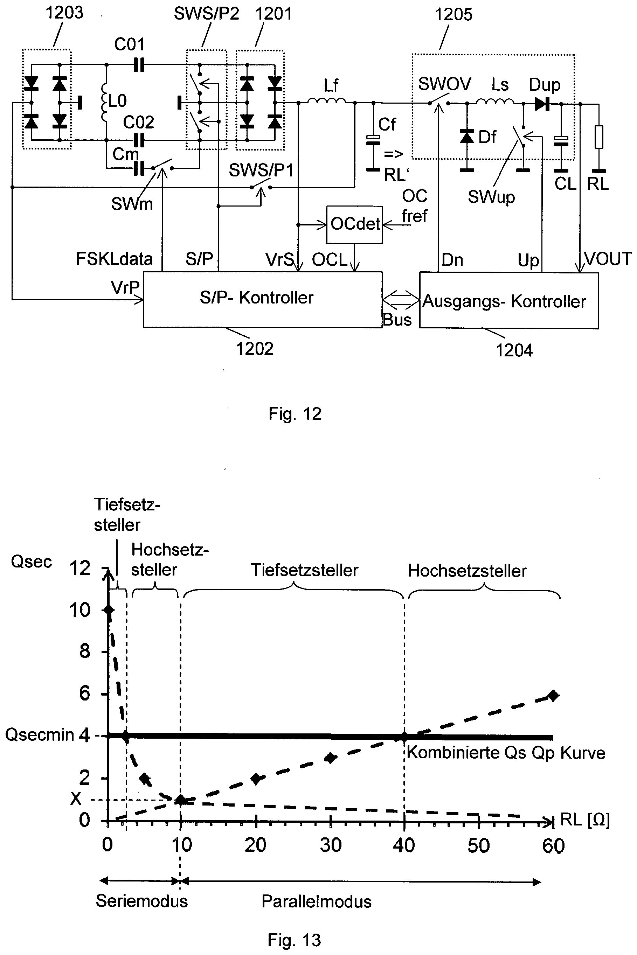

In einem weiteren Aspekt der aktuellen Erfindung wird das Konzept gemäss den Figuren 5a und 6a zusätzlich mit einem Tiefsetzsteller- oder Hochsetzsteller und/oder mit einem kombinierten Tiefsetzsteller-Hochsetzsteller vereinigt (siehe Figur 12). Die von 1 abgestrahlten elektromagnetischen Feldlinien werden von L0 und der Serie-Parallelempfängerschaltung gemäss Figur 5a empfangen. 1203 entspricht 503, 1201 entspricht 501 und die SWOV Schalter sind nicht in parallel zu den Gleichrichterdioden implementiert, sondern sind Teil des nachfolgenden Tief- und Hochsetzstellers 1205. Die anderen Schaltungsteile sind unverändert zu Figur 5a. Der Ausgang von Filters Lf, Cf speist 1205, wobei SWOV dem Tiefsetzstellerschalter und Df dessen Freilaufdiode entspricht. SWup entspricht dem Hochsetzstellerschalter und Dup dessen Klemmdiode. Der Ausgangs-Kontroller 1204 kommuniziert über den Bus mit dem S/P-Kontroller. Dabei werden die Signale VOUT, interne Taktsignale (z. Bsp. OCfref oder Takte abgeleitet von VrP oder VrS), OVS und S/P in analoger oder digitaler Form zwischen 1202 und 1204 übertragen. 1205 transformiert RL mittels den entsprechenden Ansteuersignalen Dn und/oder Up. Die Schaltungen in den Figuren 5a und 6a haben den Nachteil, dass sich die Güte nicht über den ganzen RL Bereich beliebig steuern lässt (siehe Kurve in Figur 5e). Z. Bsp. für den RL Bereich von 2,5 bis 40 Ohm resultiert immer eine Güte Qsec kleiner als 4. Dies bedeutet man, dass man die Kopplung Qsec·k nur bedingt optimieren kann. In der Lösung gemäss Figur 12 erhält man die Möglichkeit Qsec über den gesamten RL Bereich zu steuern bzw. beliebig zu vergrössern. Dabei steuert 1202 mit S/P den Empfänger für RL bis zum RL Wert, wo Qs gleich Qp ist, auf Seriemodus (siehe Punkt X in Figur 13) und oberhalb dieses RL Wertes auf Parallelmodus. Zusätzlich transformiert nun 1205 RL abhängig von der minimalen erforderlichen Güte Qsecmin. In Figur 13 ist dies für Qsecmin gleich 4 gezeigt. Für den RL Bereich von Null bis zum RL Wert, welcher ohne Transformation Qsecmin ergibt, operiert 1205 als Tiefsetzsteller. Z. Bsp. für ein RL=1Ohm resultiert nach Transformation mittels 1205 ein RL'=2,5Ohm (Seriemodus). Für den RL Bereich vom RL Wert, welcher ohne Transformation Qsecmin ergibt, bis zum RL Wert, welcher ohne Transformation X ergibt, operiert 1205 als Hochsetzsteller. Z. Bsp. für ein RL=10Ohm (Punkt X) resultiert nach Transformation mittels 1205 ein RL'=2,5Ohm (Seriemodus). Für den RL Bereich vom RL Wert, welcher ohne Transformation X ergibt, bis zum RL Wert, welcher ohne Transformation Qsecmin ergibt, operiert 1205 als Tiefsetzsteller. Z. Bsp. für ein RL=10Ohm (Punkt X) resultiert nach Transformation mittels 1205 ein RL'=40Ohm (Parallelmodus). Für den RL Bereich vom RL Wert, welcher ohne Transformation Qsecmin ergibt, bis zum RL Wert hochohmig, operiert 1205 als Hochsetzsteller. Z. Bsp. für ein RL=60Ohm resultiert nach Transformation mittels 1205 ein RL'=40Ohm (Parallelmodus). Diese Veranschaulichung zeigt ohne Berücksichtigung einer allfälligen Überkopplung, dass sich die Empfängergüte Qsec nicht nur steuern lässt, sondern auch über einen weiten Bereich von RL konstant halten lässt.

In einem Ausführungsbeispiel der aktuellen Erfindung optimieren 1202 und 1204 gemeinsam das oben beschriebene Verhalten und maximieren ein konstantes Qsec über einen weiten RL Bereich. Die Zustandmaschine nach Figur 7 gilt nach wie vor, 701, 702 und 703 sind modifiziert. Grundsätzlich wird über S/P und 1205 die Güte auf möglichst maximal kritische Kopplung optimiert (Zustand 702). Gleichzeitig wird über S/P und/oder 1205 die schnelle Ausgangsregelung gemacht bzw. VOUT begrenzt (Zustand 703). Die langsamere Regelung geschieht über FSKLdata zu 1. Vorteilhafterweise resultiert dies in höchst möglicher Kopplung, die immer kleiner ist als überkritisch und kleinstmögliche Energieabstrahlung von 1 ergibt. Tatsächlich wird im Mittelwert idealerweise nur soviel Energie abgestrahlt, wie sie an RL benötigt wird. Dies nähert auf diese Weise eine Drahtverbindung zwischen 1 und RL best möglichst an.

RL wird mittels zusätzlicher RL Strommessung in 1204 berechnet (nicht gezeigt in Figur 12). Da L0 ein Designparameter darstellt, ist L0 oder Punkt X in einem Speicher in 1204 und/oder 1202 gespeichert. 1204 steuert über den Bus das Signal S/P und definiert gleichzeitig die Betriebsart von 1205. Im Seriemodus arbeitet 1205 mit möglichst hoher Hochsetzsteller Transformation. Wird überkritische Kopplung durch OCL detektiert, so verkleinert 701 als erstes die Transformation in 1205 und erst als zweites wird der Modus durch S/P gewechselt. Im Parallelmodus arbeitet 1205 mit möglichst hoher Tiefsetzsteller Transformation. Wird überkritische Kopplung durch OCL detektiert, so verkleinert 701 als erstes die Transformation in 1205 und erst als zweites wird S/P gewechselt. Damit eine allfällige Überkopplung so schnell wie möglich bereits mit 1205 aufgehoben werden kann, wird die Transformation in 701 (nicht gezeigt) nicht nur im Wert dekrementiert, sondern wesentlich verkleinert (z. Bsp. halbiert). In 702 wird dann in 806 anstelle vom "Wechsel S/P" die Transformation von 1205 nur langsam erhöht (z. Bsp. inkrementiert). Auf diese Weise wird eine Überkopplung immer rasch aufgehoben und das System tastet sich danach wieder langsam an das maximal mögliche Qsec an. In einem Ausführungsbeispiel der aktuellen Erdindung sind 1202 und 1204 als kombinierte Teilroutinen einer Softwaresteuerung in einem Microcontroller implementiert.

In einem weiteren Aspekt der aktuellen Erfindung wird FSKLdata nicht mittels Frequenztastung (Cm, SWm) moduliert, sondern mittels kurzzeitigem Umschalten vom Signal S/P durch FSKLdata oder eine auf FSKLdata reagierende serielle Bitfolge. Dies moduliert die Kopplung abhängig von FSKLdata und entspricht einer Lastmodulation welche in 1 detektiert wird. In einem weiteren Aspekt der aktuellen Erfindung detektiert ein Empfänger FSKLdata Nachrichten von anderen Empfängern. Dabei wird die Kopplung über Qsec von anderen Empfängern modifiziert reagierend auf empfangene FSKLdata von anderen Empfängern. Dieses Verhalten wird in einem weiteren Aspekt der aktuellen Erfindung durch eine Autorisierung eingeleitet. Diese Autorisierung erfolgt über einen anderen Nachrichtenkanal (z.Bsp. WLAN, Bluetooth oder NFC).

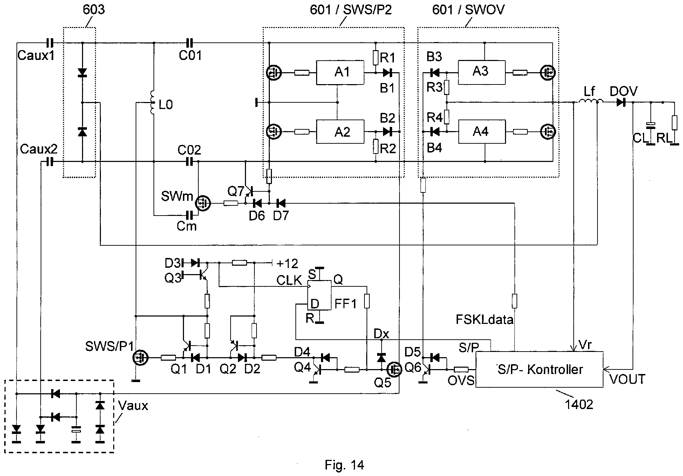

Figur 14 zeigt eine Detailimplementierung gemäss Figur 6a, dessen Schalter SWS/P1 nun aber nicht im positiven Strompfad zu Lf liegt, sondern von Masse zur Mittelanzapfung von L0 implementiert ist. Alle Komponenten von Figur 6a lassen sich unter gleicher Referenz in Figur 14 finden. Vorteilhafterweise lassen sich die eine Hälfte von 601 mit SWS/P2 und die andere Hälfte von 601 mit SWOV kombinieren. Die Komponenten A1 - A4, R1 - R4 sowie die Gate Widerstände entsprechen einer Standardschaltung von handelsüblichen Synchrongleichrichtertreiber ICs wie z. Bsp. TEA1761 und TEA1791. Die Betriebsspannungszuführung dieser ICs ist in Figur 14 nicht gezeigt. Der Ausgang des Synchrongleichrichters 601 / SWOV treibt RL über Lf, DOV und CL. Caux1 und Caux2 zweigen einen kleinen Schwingkreisenergieanteil ab und generieren in Vaux eine kleine stabile negative Spannung (ca. -1,4V), welche an die Source von Q5 gekoppelt ist. Sind S/P und OVS "0", so sind Q5, Q4, Q2, SWS/P1 und Q6 nicht leitend. Somit arbeiten alle Schalter in 601 / SWS/P2 und 601 / SWOV als normale Synchrongleichrichter. Dies entspricht dem Seriemodus. Q3 ermöglicht Zerovoltage switching (ZVS) in SWS/P1 beim Umschalten vom Serie- zum Parallelmodus. Dabei sperrt Q3 nur falls der Abgriff von L0 nicht negativer als ca. -0,7V ist. Dies stellt sich einmal pro Schwingungshalbwelle im Schwingkreis L0, C0 ein. Die daraus resultierende positive Spannungsflanke am Kollektor von Q3 latched den Eingang D zum Ausgang Q vom Flipflop FF1. Ändert S/P seinen Zustand von "0" auf "1", so springt Q bei der nächsten quasi "0" Volt-Bedingung der Drain Source Spannung bei SWS/P1 auf "hoch". Dies steuert Q4 und den Treiber Q2 durch, sodass schliesslich SWS/P1 sofort voll leitend wird. Gleichzeitig schaltet Q5 durch, was durch B1 und B2 einen Spannungsabfall über R1 und R2 generiert. Dadurch werden die Schalter in SWS/P2 zwingend leitend; die Schaltung befindet sich im Parallelmodus. Wechselt S/P seinen Zustand von "1" nach "0", so öffnet die Schottky Diode Dx die Transistoren Q4 und Q2, dies macht Q1 leitend, was SWS/P1 öffnet. Gleichzeitig sperrt Q5 und A1 und A2 arbeiten wieder als Synchrongleichrichtertreiber. Somit arbeiten wieder alle Schalter in 601 / SWS/P2 und 601 / SWOV als normale Synchrongleichrichter und die Schaltung arbeitet wieder im Seriemodus.

Auf ähnliche Weise wird 601 / SWOV gesteuert. Ist OVS "0", so sperrt Q6 und 601 / SWOV arbeitet als Synchrongleichrichter. Ist OVS "1", so leitet Q6. B3 und B4 generieren über R3 und R4 einen Spannungsabfall, welcher die Schalter SWOV zwingend leitend macht. S/P schaltet in den Parallelmodus, sodass sich die Schaltung im Schutzmodus befindet. In diesem Fall fliesst der in 603 gleichgerichtete Strom nicht mehr durch DOV in RL, sondern über die Schalter SWOV und SWS/P2 nach Masse und schlussendlich über SWS/P2 zurück in L0. Die Gatewiderstände der MOSFET-Transistoren in Figure 14 sind niederohmig und verhindern Oszillationen in der Gateansteuerung. Die Dioden D2 - D5 sind Antisättigungsdioden und und beschleunigen das Schaltverhalten der bipolar Transistoren.

In einem weiteren Ausführungsbeispiel der aktuellen Erfindung ist DOV als aktiver Schalter implementiert. Dieser Schalter wird dann von OVS oder von einem Synchrongleichrichtertreiber angesteuert.

Cm wird durch SWm an C02 gekoppelt, falls FSKLdata auf "1" geht. Dabei sperrt Q7 über D6. Falls FSKLdata "0" ist, leitet Q7 bis keine Gatespannung mehr an SWm vorhanden ist.

In einem weiteren Ausführungsbeispiel der aktuellen Erfindung ist 603 als Synchrongleichrichter gemäss 601 und deren Synchrongleichrichtertreiber A3 und A4 implementiert.

In einem weiteren Ausführungsbeispiel der aktuellen Erfindung ist FF1 nicht über den quasi Spannungsnullpunkt vom Mittelabgriff von L0 getaktet, sondern von einem Spitzenwertdetektor von Vr (nicht gezeigt in Figur 14). Das Steuerungs- bzw. Regelverhalten und alle weiteren Funktionen des S/P-Kontrollers vollziehen sich so wie in den obigen Konzepten und Ausführungsbeispielen beschrieben.

Es ist dem technisch versierten Fachmann klar, dass beschriebene Teile der Figuren 2a, 3a, 4, 5a, 6a, 7-11, 12 und 14 bzw. sämtliche beschriebene Verfahren digitales Signalprozessing umfassen. Dieses kann diskret oder integriert als programmierbare Logikschaltung (PLD, FPGA) und als Hardware oder Softwareteil eines Mikrokontrollers implementiert werden. Weiter sind auch beliebig viele Teilblöcke der Figuren 2a, 3a, 4, 5a, 6a, 7-11, 12 und 14 in integrierten Schaltungen zu integrieren (ASICs). Es ist dabei weiter offensichtlich, dass bei den beschriebenen sequentiellen Verarbeitungsschritten RAM und ROM Speicher implementiert und eingesetzt bzw. an Program- und Datenspeicherungen beteiligt sind. In einem Ausführungsbeispiel der aktuellen Erfindung wird eine neue Empfängerverarbeitungssoftware über FSKLdata eingespielt, im Empfänger gespeichert und zur Softwareaktualisierung benutzt.

Die in dieser Erfindung beschriebenen Konzepte können in jedem Multimedia Gerät wie Tablet, Mobiltelefon, TV, Portable Player, Kamera, Brille, Armbanduhr bzw. Armbandsteuereinheit mit Display, in jedem mobilen strombetriebenen Werkzeug, in allen elektrischen Haushaltsgeräten und in elektronisch ausgestatteter Kleidung (Wearable Electronic) eingesetzt werden. Die in dieser Erfindung beschriebenen Konzepte eignen sich nicht nur für Konsumergeräte, sondern auch für Geräte in der Medizintechnik, auch medizinische Implantate, im Maschinenbau, in der Landwirtschaft, im Bergbau oder auf Förderplattformen, in der Luft-, Raum- und Seefahrt, in der Elektromobilität und für Automobil- und Kraftfahrzeuganwendungen.

**Patentansprüche**

1. Methode zum Koppeln von drahtloser Energie an eine Last (RL), umfassend:

    empfangen von drahtloser Leistung in einem Empfänger mittels einem Schwingkreis (L0, C01, C02), der durch mindestens einen Kondensator (C01, C02) und mindestens eine Spule (L0) gebildet wird,
    schalten des Schwingkreises (L0, C01, C02) durch einen ersten Schalter (SWS/P2) zwischen einem ersten Modus und einem zweiten Modus, wobei im ersten Modus der Schwingkreis in Parallelresonanz arbeitet und im zweiten Modus der Schwingkreis in Serieresonanz arbeitet und **gekennzeichnet ist durch**;
    vollweggleichrichten eines ersten Gleichrichters (501, 601) einer Wechselspannung, die durch die empfangene drahtlose Leistung im zweiten Modus des Schwingkreises erzeugt wird und die Last (RL) versorgt, wobei der erste Schalter (SWS/P2) zwei Transistoren umfasst, welche parallel so zu zwei Dioden des ersten Gleichrichters (501, 601) geschaltet sind, dass jeweils je ein Transistor eine Diode überbrückt und der Schaltungsmittelpunkt der zwei Dioden mit den parallel geschalteten zwei Transistoren des ersten Schalters (SWS/P2) einen wechselspannungsmässigen Nullpunkt des Schwingkreises darstellt in mindestens einem der beiden Modi, und wobei der erste Modus aktiv ist bei geschlossenem ersten Schalter (SWS/P2), und wobei die zwei Transistoren des ersten Schalters (SWS/P2) im zweiten Modus mindestens teilweise das Vollweggleichrichten ausführen, gleichrichten eines zweiten Gleichrichters (503, 603) einer Wechselspannung, die durch die empfangene drahtlose Leistung im ersten Modus des Parallelschwingkreises erzeugt wird, koppeln der gleichgerichteten Wechselspannung des zweiten Gleichrichters mit der Last durch einen zweiten Schalter (SWS/P1) im ersten Modus, entkoppeln der gleichgerichteten Wechselspannung des zweiten Gleichrichters von der Last durch den zweiten Schalter (SWS/P1) im zweiten Modus, und
    generieren der Ansteuersignale des ersten und zweiten Schalters.

2. Die Methode nach Anspruch 1, wobei die Transistoren des ersten Schalters und deren parallel geschalteten Dioden in je einem MOSFET kombiniert sind und der Schwingkreis (L0, C01, C02) im ersten und zweiten Modus empfangene drahtlose Leistung an die Last (RL) abgibt.

3. Die Methode nach Anspruch 1, wobei das Schalten des Schwingkreises (L0, C01, C02) zwischen dem ersten und dem zweiten Modus:

    a1) auf die Last (RL) reagiert, oder
    a2) auf eine Spannung über der Last (RL) reagiert, oder
    a3) auf einen Strom durch die Last (RL) reagiert, oder
    a4) auf eine detektierte Überkopplung der drahtlosen Energieübertragungstrecke reagiert, über welche die drahtlose Energie empfangen wird.

4. Die Methode nach Anspruch 1, wobei der Schwingkreis im ersten und zweiten Modus die gleiche Resonanzfrequenz aufweist, und / oder wobei der mindestens eine Kondensator (C01, C02) und die mindestens eine Spule (L0) sowohl im ersten Modus als auch im zweiten Modus den Schwingkreis formen.

5. Die Methode nach Anspruch 1, wobei das Vollweggleichrichten im zweiten Modus zusätzlich umfasst: synchrongleichrichten der zwei Transistoren des ersten Schalters (SWS/P2) der Wechselspannung, die durch die empfangene drahtlose Leistung im zweiten Modus des Schwingkreises erzeugt wird.

6. Die Methode nach Anspruch 1, wobei das Parallelschwingkreisgleichrichten im ersten Modus zusätzlich umfasst: vollweggleichrichten des zweiten Gleichrichters (503, 603) der Wechselspannung, die durch die empfangene drahtlose Leistung im ersten Modus des Schwingkreises erzeugt wird.

7. Ein Empfänger zum empfangen von drahtloser Leistung, umfassend:

    einen Schwingkreis (L0, C01, C02) zum Empfangen von drahtloser Leistung, der durch mindestens einen Kondensator (C01, C02) und mindestens eine Spule (L0) gebildet wird, einen ersten Schalter (SWS/P2), um den Schwingkreis (L0, C01, C02) zwischen einem ersten Modus und einem zweiten Modus umzuschalten, wobei im ersten Modus der Schwingkreis in Parallelresonanz arbeitet und im zweiten Modus der Schwingkreis in Serieresonanz arbeitet und **gekennzeichnet ist durch**;

einen ersten Gleichrichter (501, 601) zum vollweggleichrichten der Schwingkreisspannung im zweiten Modus zur Versorgung einer Last (RL), wobei der erste Schalter (SWS/P2) zwei Transistoren umfasst, welche parallel so zu zwei Dioden des ersten Gleichrichters (501, 601) geschaltet sind, dass jeweils je ein Transistor eine Diode überbrückt und der Schaltungsmittelpunkt der zwei Dioden mit den parallel geschalteten zwei Transistoren des ersten Schalters (SWS/P2) einen wechselspannungsmässigen Nullpunkt des Schwingkreises darstellt in mindestens einem der beiden Modi, und wobei der erste Modus aktiv ist bei geschlossenem ersten Schalter (SWS/P2), und wobei die zwei Transistoren des ersten Schalters (SWS/P2) im zweiten Modus Teil des Vollweggleichrichters sind, und

einen zweiten Gleichrichter (503, 603), parallel zu der mindestens einer Spule, zum Erzeugen einer gleichgerichteten Parallelschwingkreisspannung, und

einen zweiten Schalter (SWS/P1) zum Koppeln der gleichgerichteten Parallelschwingkreisspannung mit der Last (RL) im ersten Modus, und zum Entkoppeln der gleichgerichteten Parallelschwingkreisspannung von der Last (RL) im zweiten Modus, wobei ein Kontroller die Steuersignale des ersten und zweiten Schalters generiert.

8. Der Empfänger nach Anspruch 7, wobei die Transistoren des ersten Schalters und deren parallel geschalteten Dioden in je einem MOSFET kombiniert sind, und / oder
wobei der Schwingkreis (L0, C01, C02) im ersten und zweiten Modus empfangene drahtlose Leistung an die Last (RL) abgibt.

9. Der Empfänger nach Anspruch 7, wobei das Schalten des Schwingkreises (L0, C01, C02) zwischen dem ersten und dem zweiten Modus:

   a1) auf die Last (RL) reagiert, oder
   a2) auf eine Spannung über der Last (RL) reagiert, oder
   a3) auf einen Strom durch die Last (RL) reagiert, oder
   a4) auf eine detektierte Überkopplung der drahtlosen Energieübertragungstrecke reagiert, über die der Empfänger Leistung empfängt.

10. Der Empfänger nach Anspruch 7, wobei der Schwingkreis im ersten und zweiten Modus die gleiche Resonanzfrequenz aufweist, und / oder

wobei der mindestens eine Kondensator (C01, C02) und die mindestens eine Spule (L0) sowohl im ersten Modus als auch im zweiten Modus den Schwingkreis formen.

11. Der Empfänger nach Anspruch 7, wobei die zwei Transistoren des ersten Schalters (SWS/P2) Teil eines Synchrongleichrichters des ersten Gleichrichters sind.

12. Der Empfänger nach Anspruch 7, wobei der zweite Gleichrichter (503, 603) als Vollweggleichrichter (503, 603) oder Zweiweggleichrichter (603) implementiert ist.

13. Der Empfänger nach Anspruch 7, wobei der Schwingkreis (L0, C01, C02) einen symmetrischen Schwingkreis von mindestens drei reaktiven Komponenten bildet und zwei der drei reaktiven Komponenten vom gleichen Typ sind und sich mindestens ein Teil der Resonanzspannung des symmetrischen Schwingkreises in mindestens einem der beiden Modi gleichmässig an den reaktiven Komponenten des gleichen Typs verteilt, und / oder
wobei der Schwingkreis (L0, C01, C02) einen symmetrischen Schwingkreis von mindestens drei reaktiven Komponenten bildet und diese drei reaktiven Komponenten sowohl im ersten Modus als auch im zweiten Modus den Schwingkreis formen.

**Claims**

1. Method for coupling wireless power to a load (RL), comprising:

   receiving wireless power in a receiver by means of a resonant circuit (L0, C01, C02) formed by at least one capacitor (C01, C02) and at least one coil (L0),
   switching the resonant circuit (L0, C01, C02) by a first switch (SWS/P2) between a first mode and a second mode, wherein in the first mode the resonant circuit operates in parallel resonance and in the second mode the resonant circuit operates in series resonance and **characterized by**:
   full-wave rectifying by a first rectifier (501, 601) of an AC voltage generated by the received wireless power in the second mode of the resonant circuit and supplying the load (RL), wherein the first switch (SWS/P2) comprises two transistors connected in parallel to two diodes of the first rectifier (501, 601) in such a way in that in each case one transistor bridges a diode and the circuit center of the two diodes with the two transistors of the first switch (SWS/P2) connected in parallel represents an AC voltage zero point of the resonant circuit in at least one of the two modes, and wherein the first mode is active when the first switch (SWS/P2) is closed, and wherein the two transistors of the first switch (SWS/P2) in the second mode at least partially perform the full-wave rectification, rectifying by a second rectifier (503, 603) of an AC voltage generated by the received wireless power in the first mode of the parallel resonant circuit, coupling the rectified AC voltage of the second rectifier to the load by a second switch (SWS/P1) in the first mode, decoupling the rectified AC voltage of the second rectifier from the load by the second switch (SWS/P1) in the second mode, and generating the drive signals of the first and second switches.

2. The method of claim 1, wherein the transistors of the first switch and their diodes connected in parallel are each combined in a MOSFET, and the resonant circuit (L0, C01, C02) outputs received wireless power to the load (RL) in the first and second modes.

3. The method of claim 1, wherein switching the resonant circuit (L0, C01, C02) between the first and second modes:

    a1) responds to the load (RL); or
    a2) responds to a voltage across the load (RL), or
    a3) responds to a current through the load (RL), or
    a4) responds to a detected overcoupling of the wireless power transmission link over which the wireless power is received.

4. The method of claim 1, wherein the resonant circuit has the same resonant frequency in the first and second modes, and/or wherein the at least one capacitor (C01, C02) and the at least one coil (L0) form the resonant circuit in both the first mode and the second mode.

5. The method according to claim 1, wherein the full-wave rectification in the second mode additionally comprises: synchronous rectifying by the two transistors of the first switch (SWS/P2) of the AC voltage generated by the received wireless power in the second mode of the resonant circuit.

6. The method of claim 1, wherein the parallel resonant circuit rectification in the first mode additionally comprises: full-wave rectifying by the second rectifier (503, 603) of the AC voltage generated by the received wireless power in the first mode of the resonant circuit.

7. A receiver for receiving wireless power, comprising:

    a resonant circuit (L0, C01, C02) for receiving wireless power formed by at least one capacitor (C01, C02) and at least one coil (L0), a first switch (SWS/P2) for switching the resonant circuit (L0, C01, C02) between a first mode and a second mode, wherein in the first mode the resonant circuit operates in parallel resonance and in the second mode the resonant circuit operates in series resonance and **characterized by**; a first rectifier (501, 601) for full-wave rectifying the resonant circuit voltage in the second mode to supply a load (RL), wherein the first switch (SWS/P2) comprises two transistors connected in parallel to two diodes of the first rectifier (501, 601) in such a way in that in each case one transistor bridges a diode and the circuit center of the two diodes with the two transistors of the first switch (SWS/P2) connected in parallel represents an AC voltage zero point of the resonant circuit in at least one of the two modes, and wherein the first mode is active when the first switch (SWS/P2) is closed, and wherein the two transistors of the first switch (SWS/P2) are part of the full-wave rectifier in the second mode, and a second rectifier (503, 603), in parallel with the at least one coil, for generating a rectified parallel resonant circuit voltage, and a second switch (SWS/P1) for coupling the rectified parallel resonant circuit voltage to the load (RL) in the first mode, and for decoupling the rectified parallel resonant circuit voltage from the load (RL) in the second mode, wherein a controller generates the control signals of the first and second switches.

8. The receiver according to claim 7, wherein the transistors of the first switch and their parallel connected diodes are each combined in a MOSFET, and/or wherein the resonant circuit (L0, C01, C02) outputs received wireless power to the load (RL) in the first and second modes.

9. The receiver according to claim 7, wherein switching the resonant circuit (L0, C01, C02) between the first and second modes:

    a1) responds to the load (RL); or
    a2) responds to a voltage across the load (RL), or
    a3) responds to a current through the load (RL), or
    a4) responds to a detected overcoupling of the wireless power transmission link over which the receiver receives power.

10. The receiver according to claim 7, wherein the resonant circuit has the same resonant frequency in the first and second modes, and/or
wherein the at least one capacitor (C01, C02) and the at least one coil (L0) form the resonant circuit in both the first mode and the second mode.

11. The receiver according to claim 7, wherein the two transistors of the first switch (SWS/P2) are part of a synchronous rectifier of the first rectifier.

12. The receiver according to claim 7, wherein the second rectifier (503, 603) is implemented as a full-wave rectifier (503, 603) or a two-way rectifier (603).

13. The receiver according to claim 7, wherein the resonant circuit (L0, C01, C02) forms a symmetrical resonant circuit of at least three reactive components and two of the three reactive components are of the same type and at least a part of the resonant voltage of the symmetrical resonant circuit in at least one of the two modes is equally distributed to the reactive components of the same type, and/or
wherein the resonant circuit (L0, C01, C02) forms a symmetrical resonant circuit of at least three reactive components and these three reactive components form the resonant circuit in both the first mode and the second mode.

**Revendications**

1. Procédé de couplage d'une énergie sans fil à une charge (RL), comprenant :

     la réception d'énergie sans fil dans un récepteur au moyen d'un circuit résonnant (L0, C01, C02) qui est formé par au moins un condensateur (C01, C02) et au moins une bobine (L0),
     la commutation du circuit résonnant (L0, C01, C02) par un premier commutateur (SWS/P2) entre un premier mode et un second mode, dans lequel dans le premier mode le circuit résonnant fonctionne en résonance parallèle et dans le second mode le circuit résonnant fonctionne en résonance série et **caractérisé par**;
     le redressement pleine onde par un premier redresseur (501, 601) d'une tension alternative générée par l'énergie sans fil reçue dans le second mode du circuit résonnant et alimentant la charge (RL), dans lequel le premier commutateur (SWS/P2) comprend deux transistors connectés en parallèle à deux diodes du premier redresseur (501, 601) de telle sorte qu'un transistor ponte à chaque fois une diode et que le milieu du circuit des deux diodes avec les deux transistors du premier commutateur (SWS/P2) montés en parallèle représente un point zéro de tension alternative du circuit résonnant dans au moins l'un des deux modes, et dans lequel le premier mode est actif lorsque le premier commutateur (SWS/P2) est fermé, et dans lequel les deux transistors du premier commutateur (SWS/P2) dans le deuxième mode réalisent au moins partiellement le redressement pleine onde,
     le redressement par un second redresseur (503, 603) d'une tension alternative générée par l'énergie sans fil reçue dans le premier mode du circuit résonnant parallèle,
     le couplage de la tension alternative redressée du second redresseur à la charge par un second commutateur (SWS/P1) dans le premier mode,
     le découplage de la tension alternative redressée du second redresseur de la charge par le second commutateur (SWS/P1) dans le second mode, et
     la génération des signaux de commande des premier et second commutateurs.

2. Procédé selon la revendication 1, dans lequel les transistors du premier commutateur et leurs diodes connectées en parallèle sont chacun combinés dans un MOSFET, et le circuit résonnant (L0, C01, C02) sort la puissance sans fil reçue vers la charge (RL) dans les premier et second modes.

3. Procédé selon la revendication 1, dans lequel la commutation du circuit résonnant (L0, C01, C02) entre le premier et le second mode :

     a1) répond à la charge (RL) ; ou
     a2) répond à une tension aux bornes de la charge (RL), ou
     a3) répond à un courant à travers la charge (RL), ou
     a4) répond à un surcouplage détecté de la liaison de transmission d'énergie sans fil sur laquelle l'énergie sans fil est reçue.

4. Procédé selon la revendication 1, dans lequel le circuit résonnant a la même fréquence de résonance dans les premier et second modes, et/ou dans lequel au moins un condensateur (C01, C02) et au moins une bobine (L0) forment
le circuit résonnant à la fois dans le premier mode et dans le second mode.

5. Procédé selon la revendication 1, dans lequel le redressement pleine onde dans le deuxième mode comprend en outre:
le redressement synchrone par les deux transistors du premier commutateur (SWS/P2) de la tension alternative générée par l'énergie sans fil reçue dans le second mode du circuit résonnant.

6. Procédé selon la revendication 1, dans lequel le redressement du circuit résonant parallèle dans le premier mode comprend en outre:
le redressement pleine onde par le deuxième redresseur (503, 603) de la tension alternative générée par l'énergie sans fil reçue dans le premier mode du circuit résonant.

7. Un récepteur pour recevoir de l'énergie sans fil, comprenant:

un circuit résonnant (L0, C01, C02) pour recevoir de l'énergie sans fil formé par au moins un condensateur (C01, C02) et au moins une bobine (L0),
un premier commutateur (SWS/P2) pour commuter le circuit résonnant (L0, C01, C02) entre un premier mode et un second mode, dans lequel dans le premier mode le circuit résonnant fonctionne en résonance parallèle et dans le second mode le circuit résonnant fonctionne en résonance série et **caractérisé par** ;
un premier redresseur (501, 601) pour redresser à double alternance la tension du circuit résonnant dans le second mode pour alimenter une charge (RL), dans lequel le premier commutateur (SWS/P2) comprend deux transistors connectés en parallèle à deux diodes du premier redresseur (501, 601) de telle sorte que, dans chaque cas, un transistor ponte une diode et le centre du circuit des deux diodes avec les deux transistors du premier commutateur (SWS/P2) connectés en parallèle représente un point zéro de tension alternative du circuit résonnant dans au moins l'un des deux modes, et dans lequel le premier mode est actif lorsque le premier commutateur (SWS/P2) est fermé, et dans lequel les deux transistors du premier commutateur (SWS/P2) font partie du redresseur pleine onde dans le second mode, et
un deuxième redresseur (503, 603), en parallèle avec au moins une bobine, pour générer une tension de circuit résonnant parallèle redressée, et
un second commutateur (SWS/P1) pour coupler la tension de circuit résonnant parallèle redressé à la charge (RL) dans le premier mode, et pour découpler la tension de circuit résonnant parallèle redressé de la charge (RL) dans le second mode, dans lequel un contrôleur génère les signaux de commande des premier et second commutateurs.

8. Le récepteur selon la revendication 7, dans lequel les transistors du premier commutateur et leurs diodes connectées en parallèle sont chacun combinés en un MOSFET, et/ou
dans lequel le circuit résonnant (L0, C01, C02) émet une puissance sans fil reçue vers la charge (RL) dans les premier et second modes.

9. Le récepteur selon la revendication 7, dans lequel la commutation du circuit résonnant (L0, C01, C02) entre le premier et le second mode:

a1) répond à la charge (RL) ; ou
a2) répond à une tension aux bornes de la charge (RL), ou
a3) répond à un courant à travers la charge (RL), ou
a4) répond à un surcouplage détecté de la liaison de transmission d'énergie sans fil sur laquelle le récepteur reçoit de l'énergie.

10. Le récepteur selon la revendication 7, dans lequel le circuit résonnant a la même fréquence de résonance dans les premier et second modes, et/ou dans lequel au moins un condensateur (C01, C02) et au moins une bobine (L0) forment le circuit résonnant à la fois dans le premier mode et dans le second mode.

11. Le récepteur selon la revendication 7, dans lequel les deux transistors du premier commutateur (SWS/P2) font partie d'un redresseur synchrone du premier redresseur.

12. Le récepteur selon la revendication 7, dans lequel le deuxième redresseur (503, 603) est mis en œuvre comme un redresseur pleine onde (503, 603) ou un redresseur bidirectionnel (603).

13. Le récepteur selon la revendication 7, dans lequel le circuit résonnant (L0, C01, C02) forme un circuit résonnant symétrique d'au moins trois composants réactifs et dans lequel deux des trois composants réactifs sont du même type et au moins une partie de la tension de résonance du circuit résonnant symétrique dans au moins l'un des deux modes est distribuée de manière égale aux composants réactifs du même type, et/ou dans lequel le circuit résonnant (L0, C01, C02) forme un circuit résonnant symétrique d'au moins trois composants réactifs et ces trois composants réactifs forment le circuit résonnant à la fois dans le premier mode et dans le second mode.

Fig. 1

Fig. 2a

Fig. 2b

Fig. 3a

Fig. 3b

Transformiere RL maximal:

=> PWM = maximal

(Qs bzw. Qp maximal)

400

417

407

Detektiere Überkopplung:

OCL = „1" ?

JA    NEIN

401

Entkopple RL von der
Sendeeinheit 1

409

Schreibe Statusregister:

OCL Flag = „0"

SendENA = „1" option

402

Schreibe Statusregister:

OCL Flag = „1"

SendENA = „0" option

410

Lade Konstant Link
(LinkTimer)

403

Reduziere RL Transformation:

=> reduziere PWM

411

408

LinkTimer = „0" ?

NEIN    JA

404

Lade Koppelverzögerung (OCTimer)

412

Dekrementiere
LinkTimer

405

Erhöhe RL
Transformation:

=> erhöhe PWM

406

OCTimer = 0 ?

JA    NEIN

413

416

Kopple RL mit
Sendeeinheit 1

414

Dekrementiere
OCTimer

415

Fig. 4

Fig. 5a

Seriemodus:

Fig. 5b

Parallelmodus:

Fig. 5c

Schutzmodus:

Fig. 5d

Fig. 5e

Fig. 6a

Parallelmodus:

Fig. 6b

OCL=„1"

OCL=„1"                    VOUT<Vsoll

701                                              703

Überkopplungs-        702    Kopplungs-        Ausgangsbegrenzung                   optimierung        regelung

OCL=„1"       OCL=„0"                    VOUT>Vsoll

Fig. 7

702: Kopplungsoptimierung

von vorherigem Zustand

807

801— | Lade Konst1 in OptiTimer |

802— | Lade VOUT in Vcompare |

808

JA   | OptiTimer = 0 ? |   NEIN

805                              803                804

JA   | VOUT>Vcompare ? |   NEIN    | Dekrementiere OptiTimer |

| Wechsle S/P |
806

Fig. 8

701: Überkopplungsbegrenzung

Überkopplung detektiert
(OCL= „1")

901 — Wechsle S/P

Reset OCL

JA    Detektiere Überkopplung:    NEIN
      OCL = „1" ?

902

910    SWOV => aktiv
       OVS = „1"

       OCL Flag = „1",
       SendENA = „0" option

Lade Konst2 in
OCTimer        903

906

904

NEIN   OCTimer = „0" ?    JA

911    Lade Konst3 in
       OCTimer

915                            Dekrementiere
                               LinkTimer

912                            905

NEIN   OCTimer = 0 ?    JA

907

Dekrementiere          SWOV => inaktiv
OCTimer                Reset OVS

914          913

916 — Reset OCL

Nächster Zustand

Fig. 9

703: Ausgangsregelung

VOUT >Vsoll

1001 — Wechsle S/P

1006

1004

NEIN VOUT>Vsoll ? JA

1005 1002 1003

SWOV => inaktiv
Reset OVS

SWOV => aktiv
OVS = „1"

Fig. 10

Regeldifferenzschlaufe:

1101

1104

Lade Konst4 in
FSKLTimer

1106

NEIN FSKLTimer = 0 ? JA

1105 1102 1103

Dekr. FSKLTimer
addiere Regeldifferenz

Mittle Regeldifferenz
Aktualisiere FSKLdata

Fig. 11

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160049800 A1
- WO 2014131938 A1